# EUROPEAN PATENT SPECIFICATION

(11) **EP 3 711 417 B1**
(45) Date of publication and mention of the grant of the patent: **11.10.2023**
(21) Application number: 17805300.5
(22) Date of filing: 16.11.2017
(51) Int. Cl.: H04L 1/1829, H04L 1/00

(54) **FEEDBACK SIGNALING PROCESSES FOR RADIO ACCESS NETWORKS**
RÜCKKOPPLUNGSSIGNALISIERUNGSVERFAHREN FÜR FUNKZUGANGSNETZWERKE
PROCESSUS DE SIGNALISATION DE RÉTROACTION POUR RÉSEAUX D'ACCÈS RADIO

(43) Date of publication of application: 23.09.2020
(73) Proprietor: Telefonaktiebolaget LM Ericsson (Publ), 164 83 Stockholm (SE)
(72) Inventor: BALDEMAIR, Robert, 170 69 Solna (SE); FALAHATI, Sorour, 112 29 Stockholm (SE); PARKVALL, Stefan, 167 57 Bromma (SE); DAHLMAN, Erik, 112 23 Stockholm (SE); CHEN LARSSON, Daniel, 226 49 Lund (SE); BEHRAVAN, Ali, 113 36 Stockholm (SE)
(74) Representative: Ericsson
(86) International application number: PCT/SE2017/051136
(87) International publication number: WO 2019/098893

(56) References cited:
- WO-A1-2012/148446
- QUALCOMM INCORPORATED: "Channelization of 1-symbol short PUCCH with 1 or 2 bits payload", 3GPP DRAFT; R1-1718559_CHANNELIZATION OF 1-SYMBOL SHORT PUCCH WITH 1 OR 2 BITS PAYLOAD, 3RD GENERATION PARTNERSHIP PROJECT (3GPP), MOBILE COMPETENCE CENTRE ; 650, ROUTE DES LUCIOLES ; F-06921 SOPHIA-A , vol. RAN WG1, no. Prague, CZ; 20171009 - 20171013 8 October 2017 (2017-10-08), XP051341740, Retrieved from the Internet: URL:http://www.3gpp.org/ftp/Meetings_3GPP_ SYNC/RAN1/Docs/ [retrieved on 2017-10-08]
- CATT: "Remaining details of pre-emption indication", 3GPP DRAFT; R1-1717838, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czechia; 20171009 - 20171013 8 October 2017 (2017-10-08), XP051341023, Retrieved from the Internet: URL:http://www.3gpp.org/ftp/Meetings_3GPP_ SYNC/RAN1/Docs/ [retrieved on 2017-10-08]
- SHARP: "Simultaneous PUCCH and PUSCH transmission and collision handling", 3GPP DRAFT; R1-1718418, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 8 October 2017 (2017-10-08), XP051341600, Retrieved from the Internet: URL:http://www.3gpp.org/ftp/Meetings_3GPP_ SYNC/RAN1/Docs/ [retrieved on 2017-10-08]
- INTEL CORPORATION: "Multiplexing of different data channel durations", 3GPP DRAFT; R1-1717398 INTEL - PREEMPTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 8 October 2017 (2017-10-08), XP051340588, Retrieved from the Internet: URL:http://www.3gpp.org/ftp/Meetings_3GPP_ SYNC/RAN1/Docs/ [retrieved on 2017-10-08]
- NOKIA ET AL: "On collisions between sTTI and TTI transmissions in UL", 3GPP DRAFT; R1-1712936 STTI AND TTI COLLISIONS IN UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20170821 - 20170825 20 August 2017 (2017-08-20), XP051315746, Retrieved from the Internet: URL:http://www.3gpp.org/ftp/Meetings_3GPP_ SYNC/RAN1/Docs/ [retrieved on 2017-08-20]

## Description

### Technical Field

This disclosure pertains to wireless or telecommunication communication technology, in particular to radio access technology, e.g. for mobile communication.

### Background

Currently, radio telecommunication technology of 5^{th} Generation is being developed, with the goal to serve a large variety of use cases. Accordingly, the related systems have to be very flexible, and new kinds of signaling and information may be required to be transmitted. For example, in some systems, the numerology of carriers may be configurably different between carriers, or even for the same carrier. This may lead to different symbol time intervals being used, providing a source of potential problems and misinterpretations in particular in the context of scheduling on different carriers.

3GPP documents R1-1718418 and R1-1718559 and WO2012/148446A1 are relevant to the disclosure.

### Summary

It is an object of this disclosure to provide approaches ameliorating problems which may be caused by ambiguous scheduling or transmission situations in particular in the context of feedback signaling. The approaches are particularly advantageously implemented in a 5^{th} Generation (5G) telecommunication network or 5G radio access technology or network (RAT/RAN), in particular according to 3GPP (3^{rd} Generation Partnership Project, a standardisation organization). A suitable RAN may in particular be a RAN according to NR, for example release 15 or later, or LTE Evolution. It should be noted that in the following, the terms data (sub)structure and data block (sub)structure may be considered to be used synonymously.

Accordingly, there is disclosed a method of operating a user equipment (UE) or a radio node in a radio access network, the user equipment or radio node being configured with a feedback configuration of transmission of feedback signaling by the user equipment or radio node. The feedback signaling pertains to subject transmission. The feedback configuration indicates transmission of feedback signaling on a first carrier with a first numerology and according to a configured transmission timing. Further, the method comprises transmitting the feedback signaling at an updated transmission timing which is later in time than the configured transmission timing if the configured transmission timing is within a signaling time interval of transmission, by the user equipment or radio node, of second signaling on the first carrier.

Moreover, a user equipment or a radio node for a radio access network is considered. The user equipment or radio node is adapted for being configured with a feedback configuration of transmission of feedback signaling by the user equipment or radio node. The feedback signaling pertains to subject transmission. Further, the feedback configuration indicates transmission of feedback signaling on a first carrier with a first numerology and according to a configured transmission timing. The user equipment or radio node is adapted further for transmitting the feedback signaling at an updated transmission timing which is later in time than the configured transmission timing if the configured transmission timing is within a signaling time interval of transmission, by the user equipment or radio node, of second signaling on the first carrier. The user equipment or radio node may comprise, and/or be adapted for utilising, processing circuitry and/or radio circuitry, in particular a transceiver, and/or one or more transmitters and/or one or more receivers, and/or a corresponding transmitting module and/or receiving module, for transmitting the feedback signaling and/or the second signaling, and/or for receiving the subject transmission. The radio node mentioned above may in particular be a network node, e.g. in backhaul or relay scenarios.

There is also disclosed a method of operating a radio node in a radio access network. The method comprises configuring a user equipment or second radio node with a feedback configuration of transmission of feedback signaling by the user equipment or second radio node, the feedback signaling pertaining to subject transmission. The feedback configuration indicates transmission of feedback signaling on a first carrier with a first numerology and according to a configured transmission timing. The method further comprises receiving the feedback signaling based on an updated transmission timing which is later in time than the configured transmission timing if the configured transmission timing is within a signaling time interval of transmission, by the user equipment or second radio node, of second signaling on the first carrier.

Also, a radio node in a radio access network is considered. The radio node is adapted for configuring a user equipment or second radio node with a feedback configuration of transmission of feedback signaling by the user equipment or second radio node, the feedback signaling pertaining to subject transmission. The feedback configuration indicates transmission of feedback signaling on a first carrier with a first numerology and according to a configured transmission timing. Furthermore, the method further comprises receiving the feedback signaling based on an updated transmission timing which is later in time than the configured transmission timing if the configured transmission timing is within a signaling time interval of transmission, by the user equipment or second radio node, of second signaling on the first carrier. The radio node may comprise, and/or be adapted for utilising, processing circuitry, and/or radio circuitry, in particular a transceiver and/or transmitter and/or receiver, and/or a configuring module and/or receiving module, for configuring and/or receiving. This radio node may in particular be a network node, but in some scenarios, e.g. for sidelink communication, may be implemented as a user equipment or terminal.

Approaches described herein suggest updating a configured transmission timing, e.g. postponing the time for transmission, if the feedback signaling would interfere with ongoing second signaling, e.g. on a data channel like PUSCH. This can be implemented for example in cross-carrier feedback signaling, which may indicate the timing for feedback signaling in different time units for symbols (different symbol time lengths) due to different numerologies. According to the approaches, frequency multiplexing on the first carrier, e.g. transmitting the feedback signaling on different frequencies (e.g. subcarriers not allocated for the second signaling) than the second signaling may be avoided, reducing signal disturbance. Also, the second signaling may be continued uninterrupted, improving overall performance and power efficiency, as retransmission of second signaling may be avoided.

The first carrier and the subject carrier may be the same or different. In some variants, a second carrier, which may be associated to the subject carrier for communication in the opposite direction of the subject transmission, may be different, or equal to the subject carrier and/or the first carrier. For example, for TDD signaling, the subject carrier and a second carrier may be the same, and may be the same as, or different from, the first carrier. For FDD, the subject carrier and the second carrier may be different. Both for FDD and TDD, the numerology of second carrier and subject carrier may be the same or different. It should be noted that the numerology used for communicating on a carrier may be configurable, and/or dependent on the communication direction. It may be considered that even on the same carrier and the same communication direction, different numerologies may be used and/or configured, e.g. dynamically or semi-statically. Generally, communication on a carrier may be configured to be limited to a bandwidth part, which may be configurable, and/or selectable, from a set of bandwidth parts, wherein the set may be configurable, and/or may comprise 2 or more, and/or up to 4, bandwidth parts. A set may be configured with control signaling, in particular semi-statically and/or with higher-layer signaling. Selecting a bandwidth part may be considered activating it, which may be performed with control signaling, e.g. dynamically and/or with DCI or SCI signaling. The first numerology may be associated to the first carrier. The first numerology and a numerology of a second carrier, and/or an associated subject carrier, may be different, or in some variants the same. The first carrier and the subject carrier, and/or the second carrier may, if they are different, separated (e.g., between upper border of the by at least 100 MHz, at least 1 GHz, or at least 2 GHz, and/or have a ratio of at least 1.5, at least 2, or more in terms of frequency, in particular their central frequency. The first carrier may be lower in frequency than the second carrier and/or subject carrier, and/or may have longer symbol time interval, e.g. of with a factor of 2 or a multiple of 2 larger than 2.

The subject transmission may be transmitted on, and/or be associated to, a subject carrier and/or a subject numerology and/or a subject channel. The subject channel may be a physical channel, in particular a downlink channel, or a sidelink channel, e.g. in sidelink scenarios. Subject transmission may be associated to, and/or represent, and/or be referred to as, subject signaling. The second signaling may be transmitted on, and/or be associated to, the first carrier and/or the first numerology and/or a signaling channel. The signaling channel may for example be a data channel or a control channel, which may be scheduled (e.g., have resources configured, e.g. dynamically or semi-statically, which may be specific for transmission of the configured radio node/UE), or may be unscheduled and/or grant-free and/or contention-based.

A signaling time interval may generally be a time interval for which signaling is scheduled, and/or in which signaling is transmitted. A signaling time interval may comprise and/or cover a time of transmission of the signaling in time domain. It may be considered that a signaling time interval is represented in units of symbol time lengths, and/or comprises a number of symbols. Generally, a transmission timing interval may extend from, and include, a beginning or start symbol to an end symbol. A signaling time interval may be limited to one transmission timing structure, e.g. a slot or subframe, such that it may begin and end in the transmission timing structure. However, variants in which the signaling time interval crosses over into another slot or subframe, or covers more than one slot or subframe, may be considered. It should be noted that depending on configuration and/or numerology, a subframe may comprise one or more slots. Moreover, it should be noted that a signaling time interval may be represented in different numerologies, such that the same interval may relate to different start and end symbols and/or slots or slot combinations. Without specific reference to a numerology or carrier, it may be assumed that a reference to a signaling time interval (or an interval or time range) is presented in the numerology and/or carrier associated to the signaling. The numerology and/or carrier associated to signaling may be represented by the carrier comprising the frequencies and/or subcarriers of the signaling, respectively their structure, in particular as defined by the subcarrier spacing, and/or the timing structure, in particular the symbol time length, and/or arrangement and/or alignment of transmission timing structures and/or symbols in such structures, e.g. the number of symbols in a slot or subframe, and/or the presence and/or length of a cyclic prefix or suffix and/or of guard periods. A signaling time interval may be included and/or scheduled in a time domain extension of resources available for the transmission of the signaling, or in some cases for the reception. In particular, there may be a signaling time interval associated for the second signaling, which may be represented in relation and/or associated to the first carrier and the first numerology. The feedback signaling may be on the first carrier, but be associated to a different numerology. In general, different signalings on the same carrier, e.g. the feedback signaling and the second signaling, may share all and/or some frequency resources on the carrier, e.g. have the same, or overlapping (e.g., partly or at least partly overlapping), frequency intervals and/or subcarriers and/or resource blocks and/or resource block groups and/or bandwidth parts. However, in some variants, different signaling on the same carrier, e.g. the feedback signaling and the second signaling, may be associated to non-overlapping frequency intervals, and/or may comprise different subcarriers and/or resource blocks or resource block groups and/or bandwidth parts. A feedback configuration may for example indicate a bandwidth part to be activated for the feedback signaling, and/or indicate one or more bandwidth parts to be deactivated and/or excluded. This configuration may in particular be based on control signaling like a control message, e.g. a DCI message or SCI message, which may be a command type message.

The second signaling generally may be configured or scheduled for transmission, e.g. by the radio access network, in particular the radio node. Transmission resources may be configured for such signaling, e.g. dynamically or semi-statically. In some cases, the second signaling may be contention-based and/or grant-free (e.g., on grant-free resources and/or RACH resources). As such second signalings may be unpredictable for a network when configuring feedback signaling, their occurrence may lead to interference with configured feedback signaling suggestions described herein are implemented.

It may generally be considered that the second signaling is scheduled for the signaling time interval. Additionally, or alternatively, transmission of the second signaling may be performed or ongoing in the signaling time interval. It may be considered that the subject signaling is received and/or decoded and/or demodulated and/or evaluated for errors, e.g. based on error decoding, during the signaling time interval, and/or that the feedback signaling, and/or the feedback information to be carried by the signaling, is determined during the signaling time interval, e.g. based on subject signaling received in or before the interval. This may in particular be implemented if the numerology associated to the subject carrier and/or a carrier associated to it (e.g., a sidelink or uplink carrier in the communication direction opposite of the subject signaling).

In some variants, the second signaling is data signaling, which may be on a data channel, in particular on PUSCH.

The subject transmission is transmitted on a subject carrier with a subject numerology, wherein the subject carrier is different from the first carrier and/or the subject numerology is different from the first numerology.

It may be considered that the configured transmission timing is configured based on a second numerology different from the first numerology. For example, the configured transmission timing may be indicated relative to a slot or slot number or symbol or symbol number in the second numerology. The configured transmission timing may be mapped to a timing, e.g. a symbol, according to the first numerology. This may in particular be implemented if the subject carrier, and/or a second carrier associated thereto for communication in the opposite direction, is different from the first carrier. A timing may generally be indicated by a slot and/or symbol in which to start and/or end associated transmission, and/or relative thereto. A configuration may generally indicate and/or comprise one or more settings or parameters of the configured device, and/or may be considered to represent a state or an indented state of the devices, and/or may represent one or more parameters stored and/or used and/or usable by the device configured with the configuration. A configuration may be selected from a set of configurations (e.g., stored in a memory arrangement) based on an indication and/or pointer and/or flag, which may for example provided with a message. Such a message may in particular be a control information message, e.g. a physical layer message, and/or a DCI or SCI message. Indicating to a device which configuration to use may be considered configuring the device.

The updated transmission timing may be determined by the radio node or user equipment, e.g. based on a transmission configuration pertaining to the first carrier, and/or based on monitoring its own behaviour of transmission, e.g. utilising its radio circuitry, and/or based on settings or scheduling thereof. The updated timing may in particular indicate the start of transmission of the feedback signaling. The updated timing may be in another transmission timing structure than the second signaling, e.g. in the next structure after the end of the second signaling, e.g. the next slot or mini-slot. In some cases, e.g. if the second signaling ends early in a slot, the updated transmission timing may correspond to a symbol in the slot the second signaling ends. Transmission on the same channel as the second signaling may be considered to be new signaling, if the transmission requires new encoding and/or modulation of content of the signaling. The updated transmission timing may be determined such that the encoding and/or modulation for the next signaling includes the feedback information to be carried by the feedback signaling. The feedback signaling may be transmitted on frequency resources associated to the timing, e.g. provided and/or scheduled for a channel or for grant-free access.

The feedback signaling comprises and/or present feedback information pertaining to the subject transmission, e.g. acknowledgement information like HARQ bits, and/or measurement information. In some cases, the feedback signaling may additionally comprise feedback pertaining to other signaling, e.g. on a different or the same carrier as the subject signaling, and/or other control information, e.g. one or more scheduling requests and/or reports, and/or related information.

In some cases, the updated transmission timing may be located on resources, which may be scheduled for a control channel or a data channel, or which may be grant-free and/or contention based. Alternatively, or additionally, the updated transmission timing may be located on a transmission occasion, which may be represented by resources available for transmission by the radio node or UE transmitting the feedback signaling. A timing being located on resources may generally refer to the signaling associated to the timing extending in time domain within the time/frequency resources it is located on. If the resources are associated to a channel, the timing being located on the resources may also indicate that the signaling extends in frequency domain within the time/frequency resources, possibly up to and/or including border symbols and/or frequencies and/or resource elements. A control channel may be a physical channel, for example a dedicated or shared channel, in particular a PUCCH or PSCCH. A data channel may be a physical channel, for example a dedicated or shared channel, e.g. a PUSCH or PSSCH or URLLC channel. It may be considered that the updated transmission timing is determined to be located in the next resources (in time domain) after the second signaling ends or is scheduled to end available for transmission by the UE or radio node, e.g. based on configured or scheduled resources. The next resources may be channel-specific, e.g. the next control channel resources or the next data channel resources, and/or may be the next available grant-free and/or contention based resources. However, in some variants they may represent the next resources for transmission available. Transmitting on the next available resources may generally pertain to using some (or all) of the resources, which may represent a pool or range of resources or resource elements, which may be contiguous in time and/or frequency with a time interval and/or frequency interval. However, the actual resources or REs used for transmitting the signaling may in some cases not be on earliest time (e.g., the first symbol of the resources), but later within the resources, or distributed in time within the resources. Generally, resources in this context may refer to a resource structure like a resource pool and/or resource region and/or set of resource elements, which may be available for transmission, within which the feedback signaling is transmitted. The resources may in particular be larger than the resources needed for transmitting the feedback signaling. In some variants, the updated transmission timing, and/or the resources used for transmission, may be determined based on a priority of the feedback signaling and/or the subject channel, e.g. in comparison to other signaling to be transmitted. The priority may be indicated with a feedback configuration, in particular with a control message scheduling the feedback signaling and/or the subject transmission. In some cases, the priority may be implicitly indicated, and/or may be determined based on configured priority information, e.g. a table or list. It may be considered that the updated transmission timing and/or the resources are determined based on the channel and/or priority. In particular, instead of the next available transmission opportunity/resources, later resources and/or a later opportunity may be determined for transmission of the feedback signaling based on the priority, e.g. if other signaling has higher priority.

It may be considered that the feedback signaling may be rate-matched or punctured on data signaling after the second signaling. For rate-matching, the feedback information, respectively bits representing the information, of the feedback signaling may be rate-matched. For puncturing, modulation symbols representing the feedback information may be put on resources scheduled for the data signaling after modulation of the data signaling.

In some variants, the feedback signaling may comprise an indication of the subject transmission it pertains to. Such an indication may for example indicate channel and/or carrier and/or numerology and/or resources and/or timing and/or bandwidth part and/or type of the subject transmission.

The subject transmission may be data signaling or control signaling. The transmission may be on a shared or dedicated channel. Data signaling may be on a data channel, for example on a PDSCH or PSSCH, or on a dedicated data channel, e.g. for low latency and/or high reliability, e.g. a URLLC channel. Control signaling may be on a control channel, for example on a common control channel or a PDCCH or PSCCH, and/or comprise one or more DCI messages or SCI messages. In some cases, the subject transmission may comprise, or represent, reference signaling. For example, it may comprise DM-RS and/or pilot signaling and/or discovery signaling and/or sounding signaling and/or phase tracking signaling and/or cell-specific reference signaling and/or user-specific signaling, in particular CSI-RS. Feedback based on reference signaling may comprise measurement information, e.g. CQI/CSI information and/or related information.

It may be considered that the configured transmission timing is configured relative to a second carrier, and/or a second numerology, which may have a shorter symbol time length than the first numerology. The symbol time length maybe related to and/or be defined by the subcarrier spacing. The numerology and/or symbol time length and/or subcarrier spacing of a carrier, in particular the first and/or second carrier, may be configured or configurable, in particular with higher-layer signaling.

In general, a configuration, in particular the feedback configuration, may be configured based on one or more messages. Such messages may be associated to different layers, and/or there may be at least one message for dynamical configuration and/or at least one message for semi-static configuration. Different messages may configure different or similar or the same parameter/s and/or setting/s; in some cases, dynamic configuration, e.g. with DCI/SCI signaling, may override semi-static configuration, and/or may indicate a selection from a set of configurations, which may e.g. be pre-defined and/or configured with higher layer/semi-static configuration. In particular, a configuration like a feedback configuration may be configured with one or more Radio Resource Control (RRC) messages and/or one or more Medium Access Control (MAC) messages and/or one or more Control Information messages, e.g. Downlink Control Information (DCI) messages and/or Sidelink Control Information (SCI) messages.

Transmitting feedback signaling may be based on, and/or comprise, determining feedback information, e.g. one or more bits representing the feedback information. Determining feedback information may comprise performing demodulation and/or error decoding and/or error detection and/or error correction, and/or determining one or more bits of acknowledgement information, e.g. pertaining to the subject transmission. Alternatively, or additionally, it may comprise performing measurement/s on the subject transmission, e.g. for demodulation, and/or for providing measurement information and/or for measurement reporting. In some cases, it may comprise determining a scheduling request, and/or providing scheduling-related information, e.g. regarding a buffer status.

A feedback configuration may configure a HARQ codebook. The codebook may be configured dynamically. Performing re-transmission may comprise transmitting the control information again, if it was not received correctly, e.g., according to the feedback. Such re-transmission may use a different transmission format or mode and/or MCS and/or error encoding than an earlier transmission. The number of transmission of specific control information may be counted, and in some cases, may be limited in number by a threshold, which may be predefined and/or configured or configurable. If the threshold is reached, retransmission may be stopped. It may be considered that performing retransmission comprises transmitting new control information and/or omitting retransmission of control information if correct reception is indicated by the feedback. A radio node may generally be adapted for performing retransmission based on received feedback signaling.

Control information may generally be transmitted in a control message, e.g. on a physical layer or channel, e.g. as DCI message or SCI message. A control message may be a command type message, which may comprise, and/or consist of, command type information; or a scheduling type message, which may comprise scheduling information, e.g. scheduling data signaling. Control information may comprise scheduling type control information (or, shorter, scheduling type information), e.g. control information indicating resources and/or transmission parameters for reception of signaling, and/or control information indicating resources and/or transmission parameters for transmission of signaling. The signaling may in particular be data signaling, e.g. on a data channel. Control information may in particular comprise, or consist of, command type control information, and/or be included into a command type message. In general, control information or control message, e.g. DCI or SCI messages, may be distinguished between scheduling type information/messages and command type information/messages. A scheduling type message may schedule transmission on a data channel (data signaling), e.g. for reception or transmission for the target radio node, e.g. in downlink or uplink, respectively. Scheduling grant and scheduling assignment are examples of such scheduling type messages. A command type message may be a message of a different type, e.g., not scheduling transmission on a data channel. A command type message may comprise a set of instructions, which may be configurable or flexible. The instructions may be scheduling-independent. Command type information may for example indicate and/or instruct switching of bandwidth, e.g. to another bandwidth part, and/or activation or deactivation of a carrier and/or cell and/or bandwidth part, and/or activation or deactivation of grant-free transmissions, and/or indications of selection a parameter or configuration out of a set of configured parameters or configurations. In some variants, a command type message may be scheduling independent such that it does not schedule data signaling, or it may have a structure in which such scheduling may be configurable or optional. For the command type, there may be no scheduled transmission based on which reception of the control information may be inferred. It should be noted that scheduling type messages may comprise command type information.

Transmitting feedback signaling may generally comprise, and/or be based on, determining feedback information, e.g. one or more feedback or ACK/NACK bits. Such determining may comprise performing error decoding, e.g. based on error coding bits, e.g. CRC and/or FEC bits associated to the subject transmission, e.g. data or control information, which may be included in the subject transmission. Error decoding may comprise correcting information, for example based on FEC bits. The error coding bits may be determined based on the information content bits, e.g. utilising an error coding scheme like CRC, and/or polar coding or LDPC coding or Reed Muller coding. The information content may be represented by bits. The information, and in some cases error coding bits associated thereto like error detection bits and/or error correction bits, like CRC and/or FEC bits, may be considered to represent one or more data structures or substructures, for each of which one or more feedback bits, e.g. to indicate ACK or NACK, may be included in the acknowledgement feedback. Thus, at least one bit may be provided for a data structure and/or the whole of the information and/or a message carrying it, and/or one bit may be provided for one or more substructures thereof, to which corresponding error coding may be associated and/or provided, e.g. in the message or signaling. A message may be considered to be similar to a transport block and/or a code block group. One or more acknowledgement process identifiers like a HARQ or ARQ identifier may be associated to the subject transmission. A bit subpattern representing reception (e.g., ACK/NACK or DTX/DRX) may be generally associated to the information in the acknowledgement feedback (acknowledgment feedback may refer to feedback information representing acknowledgement information).

Acknowledgement feedback may be transmitted based on a feedback codebook, e.g. a HARQ codebook. A codebook may indicate which bit/s of feedback pertain to which transmission and/or information and/or data structure (e.g., transport block or code block or code block group and/or message and/or signaling or transmission), e.g. indicating acknowledgment or non-acknowledgement, or non-transmission/reception.

It may be considered that transmitting the feedback signaling, in particular of acknowledgement feedback, is based on determining whether the subject transmission has been received correctly, e.g. based on error coding and/or reception quality. Reception quality may for example be based on a determined signal quality.

Control information may generally be transmitted in a control information message, in particular on a control channel, which may be on a dedicated or shared channel, for example a physical channel. The channel may in particular be a PDCCH or a common control channel, or a PSCCH.

In some variants, a feedback configuration, and/or control information configuring it, may comprise a position indication indicating a position of the acknowledgement feedback relative to second acknowledgement feedback and/or in a feedback or HARQ codebook. The second acknowledgement feedback and/or an associated second resource may be indicated in a control message, e.g. the control message carrying the control information. The position indication may comprise an indicator like a downlink assignment indicator (DAI), which may indicate or count a number of data structures (like transport blocks and/or code blocks and/or code block groups and/or messages and/or control/command messages) for which acknowledgement feedback is scheduled and/or indicated, e.g. control feedback and/or other acknowledgement feedback. Different control messages, e.g. scheduling assignments, may comprise differently valued indicators, e.g. representing counts. A control message may optionally comprise a total number indicator, which may indicate a total number of data structures for which feedback is scheduled and/or indicated. Such an indicator may be referred to as total DAI. Alternatively, or additionally, a position indication and/or the indicator may indicate a count of bits scheduled and/or indicated for feedback, or a total number of bits, respectively. A count may pertain to a HARQ codebook, for example indicating where in the HARQ codebook a bit subpattern representing the feedback information for a data structure is to be located. It may be considered that for different types of data structures and/or channels and/or resource pools, different codebooks may be used. Feedback that is combined may be based on the same codebook. In some variants, a subpattern combination pertaining to control information may also pertain to data signaling, e.g. data signaling scheduled for reception, which may be scheduled by the control message carrying the control information. In such a case, there may be only one indicator, e.g. indicating one count, based on which the target radio node may include the subpattern in the codebook. The subpattern combination may comprise a subpattern indicating reception of the control information and a subpattern indicating reception of the data signaling, e.g., in a predefined or configured or configurable order. For example, the subpattern combination may comprise two bits, wherein one bit may indicate ACK/NACK for the control information, and the other ACK/NACK for the data signaling. Other orders, or different subpatterns may be considered. Subject transmission may in general comprise one or more messages, in particular one or more control messages, and/or one or more transmissions, e.g. pertaining to one or more channels, e.g. a data channel and/or a control channel. Such transmissions may be distributed over time, e.g. in different slots and/or mini-slots.

Information, in particular control information, may be carried in an associated message, which may be carried and/or represented by associated signaling. The information and/or message and/or signaling may be associated to a specific channel. Accordingly, information may be considered to be carried by the corresponding signaling as well as the message and/or on the associated channel.

There is also described a program product comprising instructions adapted for causing processing circuitry to control and/or perform a method as described herein.

A carrier medium arrangement carrying and/or storing a program product as described herein is also envisioned.

A system comprising a plurality of radio nodes as described herein, in particular a network node and one or more user equipments may be considered. Acknowledgement feedback or acknowledgement information pertaining to a transmission and/or information like control information may generally be information allowing (at least) indication of ACK or NACK for the information, for example a message or data structure or substructure thereof. In some cases, instead of a NACK, no transmission of feedback may be provided, e.g. in a one-bit or one-subpattern codebook pertaining only to the control information. In this case, a node expecting feedback may consider non-transmission as NACK or an indication that the control message/information has been wrongly received or not been received. Acknowledgement feedback may also be referred to as acknowledgement response (or, shorter, simply be referred to as feedback) and/or may be considered a form of acknowledgment signaling. These terms may be used exchangeably. Feedback, e.g. acknowledgement feedback, may represent uplink signaling, subject transmission, e.g. control information or control signaling or data signaling, to which the acknowledgement feedback or feedback signaling pertains is be downlink signaling. However, variants in which both may be sidelink signaling (with different communication directions) are envisioned. Acknowledgement feedback may in particular be HARQ feedback.

Acknowledgement signaling may generally represent and/or comprise and/or contain acknowledgement information, which may be structured based on a feedback configuration, e.g. a codebook like a feedback or HARQ codebook. The codebook may generally be dynamic, e.g. based on one or more control messages, e.g. DCI information and/or scheduling assignments and/or command type messages. Variants with configured and/or predefined and/or static codebook or codebooks may be considered.

A configuration may generally be indicated and/or configured with one or more messages, which may be associated to the same or different layers or type, e.g. physical layer and/or RLC layer and/or MAC layer and/or RRC and/or DCI. In particular, part of a configuration may be indicated and/or configured semi-statically /and/or with RRC and/or MAC signaling), and/or a part may be pre-configured or predefined, and/or a part may be indicated and/or configured dynamically, e.g. with DCI or SCI signaling.

Acknowledgement information may represent and/or comprise one or more bits, in particular a pattern of bits. Multiple bits pertaining to a data substructure may be considered a subpattern. The structure of acknowledgement information may indicate the order, and/or meaning, and/or mapping, and/or pattern of bits (or subpatterns of bits) of the information. An acknowledgment configuration, in particular the feedback configuration, may indicate the size of, and/or arrangement and/or mapping of bits of, acknowledgement information carried by the acknowledgement signaling the configuration pertains to. The structure or mapping may in particular indicate one or more data block structures, e.g. code blocks and/or code block groups and/or transport blocks and/or messages, e.g. command messages, the acknowledgement information pertains to, and/or which bits or subpattern of bits are associated to which data block structure. In some cases, the mapping may pertain to one or more acknowledgement signaling processes, e.g. processes with different identifiers, and/or one or more different data streams. The configuration may indicate to which process/es and/or data stream/s the information pertains. Generally, the acknowledgement information may comprise one or more subpatterns, each of which may pertain to a data block structure, e.g. a code block or code block group or transport block. A subpattern may be arranged to indicate acknowledgement or non-acknowledgement, or another retransmission state like non-scheduling or nonreception, of the associated data block structure. It may be considered that a subpattern comprises one bit, or in some cases more than one bit. It should be noted that acknowledgement information may be subjected to significant processing before being transmitted with acknowledgement signaling. Different configurations may indicate different sizes and/or mapping and/or structures and/or pattern.

An acknowledgement configuration, in particular the feedback configuration, may generally indicate the number of bits of acknowledgement information represented by the acknowledgement signaling, and/or the size of the acknowledgement information, wherein the size might be represented by a number of bits and/or number of modulation symbols.

It may be considered that an acknowledgement configuration, in particular the feedback configuration, may indicate a mapping of one or more acknowledgment bit subpattern/s to one or more data block structures to which the acknowledgement bit subpatterns pertain, e.g. to one or more code block groups or one or more transport blocks, or a combination thereof. An acknowledgement bit pattern may represent acknowledgement information, an acknowledgement bit subpattern may represent a subpattern of the pattern.

A transmission format may generally indicate one or more data block structures or substructures for transmission or reception, and/or how a data block like a transport block (and/or a related structure) is divided, e.g. into subblocks or subblock groups, like code block/s and/or code block group/s. A transmission format may in some cases pertain to more than one data block, and/or may pertain to more than one acknowledgement signaling process. It may be considered that a transmission format indicates size in bits and/or coding for the one or more data block structures or substructures. A transmission format may pertain to signaling to be transmitted by a radio node, or to signaling to be received, and/or to acknowledgement signaling pertaining to signaling to be received. For different communication directions, and/or different carriers and/or bandwidth parts, and/or sets thereof, and/or different configurations, in particular different configurations of the set of acknowledgement configurations, different transmissions formats may be utilised, e.g. defined and/or configured. In particular, a transmission format for transmission on the transmission resources may be different from a transmission format associated to an acknowledgement configuration like the feedback configuration. Transmission formats may be independently configured from each other, e.g. using different messages and/or different signaling, e.g. on different layers of the protocol stack.

A feedback configuration, in particular an acknowledgement configuration, may generally be a code block group configuration, which may indicate a mapping of one or more acknowledgement information subpatterns (e.g., one or more bits) to one or more code block groups, each of which may comprise or consist of the same or a different number of code blocks, in particular one or more code blocks. Each subpattern may be mapped to one code block group. In some variants, an acknowledgement configuration may indicate a mapping of one or more subpatterns to one or more transport blocks, each of which may comprise and/or consist of one or more code block groups. Each subpattern may be mapped to one transport block. An acknowledgement configuration may pertain to a combination of code block group/s and transport block/s, in particular regarding the structure or transmission format of corresponding acknowledgement information. An acknowledgement configuration may be considered to configure and/or format feedback or acknowledgement information pertaining to code block groups or transport blocks or code blocks.

A data block structure may correspond to a scheduled data block, e.g. for data signaling. The data blocks may be associated to separately scheduled transmissions, e.g. separate channels and/or instances and/or carriers and/or component carriers and/or data streams, e.g. in the context of carrier aggregation and/or multipleantenna transmissions, e.g. MIMO (Multiple-Input, Multiple-Output). The data blocks and/or associated data signaling may be for downlink, or in some cases for sidelink. The feedback signaling, in particular acknowledgement signaling, may generally be uplink signaling, but in some variants may be sidelink signaling. However, there may be considered cases in which data signaling is uplink signaling, e.g. in the context of retransmission performed by a user equipment. A subpattern may represent the acknowledgement information and/or feedback for the associated data block, e.g. with the size as indicated by an assignment indication. Different data blocks may be associated to different transmission instances and/or different acknowledgment signaling processes, e.g. HARQ processes. An acknowledgement signaling procedure may comprise one or more acknowledgement signaling processes, which may pertain to the same communication direction.

A data block structure (or, shorter, data structure) may generally represent, and/or be associated to, a scheduled data block and/or corresponding signaling. The data block may be scheduled for reception, e.g. by control signaling, in particular a control information message, which may be a scheduling assignment. In some cases, a scheduled data block may not be received, which may be reflected in the corresponding acknowledgement signaling. A number of data block structures, and/or the number of assignment indications, may be considered to represent a number of transmissions of data scheduled to be received by the user equipment (or second radio node).

A data block structure may generally represent, and/or correspond to, a data block, which may generally be a block of data and/or bits. A data block may for example be a transport block, code block, or code block group. It may be considered that a data block structure represents a data block which may be intended to be subjected to an acknowledgement signaling process. A data block may comprise one or more subblocks, which may be grouped into one or more subblock groups, e.g. code block groups. A data block may in particular be a transport block, which may comprise one or more code blocks and/or one or more code block groups. A data block structure may be considered to accordingly represent a transport block, code block or code block group. A subblock group like a code block group may comprise one or more subblocks, e.g. code blocks. It may be considered that a data block comprises one or more subblock groups, which may have the same or different sizes (e.g., in number of bits, e.g. systemic and/or coding bits). It may be considered that a data block comprises information bits or systematic bits (which may be considered to represent data to be transmitted and/or error detection bits) and/or coding bits, e.g. bits for error coding like error detection and/or in particular error correction coding, and/or parity or CRC (Cyclic Redundancy Check) bits. A subblock (e.g., code block) and/or subblock group (e.g., code block group) may analogously comprise systemic and/or coding bits. In some cases, systematic bits may be considered to comprise information and error detection bits determined based on the information bits. Parity bits may be considered to represent error correction coding bits. It should be noted that for a data structure (like a transport block) comprising one or more substructures (e.g., CBGs or code blocks), the systematic bits, and possibly parity bits, of the substructures may be considered information bits, based on which error detection coding and/or correction coding may be performed.

An acknowledgment signaling process may be a HARQ process, and/or be identified by a process identifier, e.g. a HARQ process identifier or subidentifier. Acknowledgement signaling and/or associated acknowledgement information may be referred to as feedback. It should be noted that data blocks or structures to which subpatterns may pertain may be intended to carry data (e.g., information and/or systemic and/or coding bits). However, depending on transmission conditions, such data may be received or not received (or not received correctly), which may be indicated correspondingly in the feedback. In some cases, a subpattern of acknowledgement signaling may comprise padding bits, e.g. if the acknowledgement information for a data block requires fewer bits than indicated as size of the subpattern. Such may for example happen if the size is indicated by a unit size larger than required for the feedback.

Acknowledgment information may generally indicate at least ACK or NACK, e.g. pertaining to an acknowledgment signaling process, or an element of a data block structure like a data block, subblock group or subblock, or a message, in particular a control message. Generally, to an acknowledgment signaling process there may be associated one specific subpattern and/or a data block structure, for which acknowledgment information may be provided.

An acknowledgment signaling process may determine correct or incorrect reception, and/or corresponding acknowledgement information, of a data block like a transport block, and/or substructures thereof, based on coding bits associated to the data block, and/or based on coding bits associated to one or more data block and/or subblocks and/or subblock group/s. Acknowledgement information (determined by an acknowledgement signaling process) may pertain to the data block as a whole, and/or to one or more subblocks or subblock groups. A code block may be considered an example of a subblock, whereas a code block group may be considered an example of a subblock group. Accordingly, the associated subpattern may comprise one or more bits indicating reception status or feedback of the data block, and/or one or more bits indicating reception status or feedback of one or more subblocks or subblock groups. Each subpattern or bit of the subpattern may be associated and/or mapped to a specific data block or subblock or subblock group. In some variants, correct reception for a data block may be indicated if all subblocks or subblock groups are correctly identified. In such a case, the subpattern may represent acknowledgement information for the data block as a whole, reducing overhead in comparison to provide acknowledgement information for the subblocks or subblock groups. The smallest structure (e.g. subblock/subblock group/data block) the subpattern provides acknowledgement information for and/or is associated to may be considered its (highest) resolution. In some variants, a subpattern may provide acknowledgment information regarding several elements of a data block structure and/or at different resolution, e.g. to allow more specific error detection. For example, even if a subpattern indicates acknowledgment signaling pertaining to a data block as a whole, in some variants higher resolution (e.g., subblock or subblock group resolution) may be provided by the subpattern. A subpattern may generally comprise one or more bits indicating ACK/NACK for a data block, and/or one or more bits for indicating ACK/NACK for a subblock or subblock group, or for more than one subblock or subblock group.

A subblock and/or subblock group may comprise information bits (representing the data to be transmitted, e.g. user data and/or downlink/sidelink data or uplink data). It may be considered that a data block and/or subblock and/or subblock group also comprises error one or more error detection bits, which may pertain to, and/or be determined based on, the information bits (for a subblock group, the error detection bit/s may be determined based on the information bits and/or error detection bits and/or error correction bits of the subblock/s of the subblock group). A data block or substructure like subblock or subblock group may comprise error correction bits, which may in particular be determined based on the information bits and error detection bits of the block or substructure, e.g. utilising an error correction coding scheme, e.g. LDPC or polar coding. Generally, the error correction coding of a data block structure (and/or associated bits) may cover and/or pertain to information bits and error detection bits of the structure. A subblock group may represent a combination of one or more code blocks, respectively the corresponding bits. A data block may represent a code block or code block group, or a combination of more than one code block groups. A transport block may be split up in code blocks and/or code block groups, for example based on the bit size of the information bits of a higher layer data structure provided for error coding and/or size requirements or preferences for error coding, in particular error correction coding. Such a higher layer data structure is sometimes also referred to as transport block, which in this context represents information bits without the error coding bits described herein, although higher layer error handling information may be included, e.g. for an internet protocol like TCP. However, such error handling information represents information bits in the context of this disclosure, as the acknowledgement signaling procedures described treat it accordingly.

In some variants, a subblock like a code block may comprise error correction bits, which may be determined based on the information bit/s and/or error detection bit/s of the subblock. An error correction coding scheme may be used for determining the error correction bits, e.g. based on LDPC or polar coding. In some cases, a subblock or code block may be considered to be defined as a block or pattern of bits comprising information bits, error detection bit/s determined based on the information bits, and error correction bit/s determined based on the information bits and/or error detection bit/s. It may be considered that in a subblock, e.g. code block, the information bits (and possibly the error correction bit/s) are protected and/or covered by the error correction scheme or corresponding error correction bit/s. A code block group may comprise one or more code blocks. In some variants, no additional error detection bits and/or error correction bits are applied, however, it may be considered to apply either or both. A transport block may comprise one or more code block groups. It may be considered that no additional error detection bits and/or error correction bits are applied to a transport block, however, it may be considered to apply either or both. In some specific variants, the code block group/s comprise no additional layers of error detection or correction coding, and the transport block may comprise only additional error detection coding bits, but no additional error correction coding. This may particularly be true if the transport block size is larger than the code block size and/or the maximum size for error correction coding. A subpattern of acknowledgement signaling (in particular indicating ACK or NACK) may pertain to a code block, e.g. indicating whether the code block has been correctly received. It may be considered that a subpattern pertains to a subgroup like a code block group or a data block like a transport block. In such cases, it may indicate ACK, if all subblocks or code blocks of the group or data/transport block are received correctly (e.g. based on a logical AND operation), and NACK or another state of non-correct reception if at least one subblock or code block has not been correctly received. It should be noted that a code block may be considered to be correctly received not only if it actually has been correctly received, but also if it can be correctly reconstructed based on soft-combining and/or the error correction coding.

A subpattern may pertain to one acknowledgement signaling process and/or one carrier like a component carrier and/or data block structure or data block. It may in particular be considered that one (e.g. specific and/or single) subpattern pertains, e.g. is mapped by the codebook, to one (e.g., specific and/or single) acknowledgement signaling process, e.g. a specific and/or single HARQ process. It may be considered that in the bit pattern, subpatterns are mapped to acknowledgement signaling processes and/or data blocks or data block structures on a one-to-one basis. In some variants, there may be multiple subpatterns (and/or associated acknowledgment signaling processes) associated to the same component carrier, e.g. if multiple data streams transmitted on the carrier are subject to acknowledgement signaling processes. A subpattern may comprise one or more bits, the number of which may be considered to represent its size or bit size. Different bit n-tupels (n being 1 or larger) of a subpattern may be associated to different elements of a data block structure (e.g., data block or subblock or subblock group), and/or represent different resolutions. There may be considered variants in which only one resolution is represented by a bit pattern, e.g. a data block. A bit n-tupel may represent acknowledgement information (also referred to a feedback), in particular ACK or NACK, and optionally, (if n>1), may represent DTX/DRX or other reception states. ACK/NACK may be represented by one bit, or by more than one bit, e.g. to improve disambiguity of bit sequences representing ACK or NACK, and/or to improve transmission reliability.

Generally, the feedback signaling, in particular acknowledgement signaling may be signaling at one instance and/or in one transmission timing structure, and/or scheduled for common transmission and/or the acknowledgement information may be jointly encoded and/or modulated. The acknowledgement information or feedback information may pertain to a plurality of different transmissions, which may be associated to and/or represented by data block structures, respectively the associated data blocks or data signaling. The data block structures, and/or the corresponding blocks and/or signaling, may be scheduled for simultaneous transmission, e.g. for the same transmission timing structure, in particular within the same slot or subframe, and/or on the same symbol/s. However, alternatives with scheduling for non-simultaneous transmission may be considered. For example, the acknowledgment information may pertain to data blocks scheduled for different transmission timing structures, e.g. different slots (or mini-slots, or slots and mini-slots) or similar, which may correspondingly be received (or not or wrongly received). Scheduling signaling may generally comprise indicating resources, e.g. time and/or frequency resources, for example for receiving or transmitting the scheduled signaling.

A radio node, in particular a configuring radio node, may generally be adapted for scheduling data blocks or subject transmission for transmission and/or to provide and/or determine and/or configure associated assignment indications, which may include a total assignment indication. Configuring a second radio node or an UE may comprise such scheduling and/or associated determining and/or configuring and/or providing of the assignment indications.

A resource structure may represent time and/or frequency and/or code resources. In particular, a resource structure may comprise a plurality of resource elements, and/or one or more resource blocks/PRBs.

Signaling may be considered to carry a message and/or information, if the message and/or information is represented in the (modulated) waveform of the signaling. In particular, extraction of a message and/or information may require demodulation and/or decoding of the signaling. Information may be considered to be included in a message if the message comprises a value and/or parameter and/or bit field and/or indication or indicator representing the information, or more than one or a combination thereof. Information included in such a message may be considered to be carried by the signaling carrying the message, and vice versa. A signaling characteristic, however, may pertain to a characteristic accessible without demodulation and/or decoding, and/or may be determined or determinable independent thereof. However, in some cases it may be considered that signaling is demodulated and/or decoded to determine whether the characteristic is associated to specific signaling, e.g. if the resources characterising the signaling actually belong to control signaling and/or to signaling intended for the responding radio node or user equipment. Also, in some cases, the characteristic may be provided as information in a message, in particular if the characterising signaling is not carrying the selection control message. Generally, selection of the resource structure may be based on one or more than one signaling characteristics. A signaling characteristic may in particular represent one or more resources, in particular in time domain, e.g. beginning and/or end and/or duration of the signaling, e.g., represented in symbol/s, and/or frequency range or resources of the signaling, e.g. represented in subcarrier/s, and/or numerology of the signaling, in particular of control signaling or data signaling like PDSCH signaling or PSSCH signaling. In some cases, the characteristic may indicate a message format, e.g. a format of the selection control message, for example an associated DCI or SCI format. It may generally be considered that a signaling characteristic represents and/or indicates a DCI format and/or search space (e.g., reception pool) and/or code, e.g. scrambling code, and/or an identity, e.g. one of different identities (like R-NTI or C-NTIs) assigned to the responding radio node or user equipment. Control signaling may be scrambled based on such identity.

Transmitting acknowledgment information/feedback on resources may comprise multiplexing acknowledgement information and data/data signaling on the transmission resources, e.g., for UCI on PUSCH scenarios. In general, transmitting acknowledgement information and/or feedback may comprise mapping the information to the transmission resources and/or modulation symbol/s, e.g. based on a modulation and coding scheme and/or transmission format. The acknowledgement information may be punctured or rate-matched. Acknowledgement information pertaining to different subject transmissions and/or acknowledgment signaling processes may be mapped differently. For example, acknowledgement information pertaining to late subject transmissions and/or having a size smaller than a threshold size (e.g., 3 or 2 bits) may be punctured, whereas acknowledgment information pertaining to earlier (non-late) subject transmissions and/or having a size equal to or larger than the threshold size may be rate-matched.

Feedback signaling, e.g. acknowledgement feedback, may generally be transmitted on resources and/or on a channel and/or according to a transmission format according to one or more configurations, which may for example be selectable based on one or more indications of control information, e.g. of the control message carrying the control information.

### Brief description of the drawings

The drawings are provided to illustrate concepts and approaches described herein, and are not intended to limit their scope. The drawings comprise:
Figure 1, showing an exemplary diagram of updating a transmission timing;
Figure 2, showing an exemplary radio node implemented as a user equipment; and
Figure 3, showing an exemplary radio node implemented as a network node.

### Detailed description

In the following, approaches are described for illustrative purposes in the context of NR RAT. However, they are generally applicable with other technologies. Also, communication in uplink and downlink between a transmitting radio node (transmitting RN) like a network node and a target radio node (target RN) like an UE is described by way of example. The approaches should not be construed to be limited to such communication, but can also be applied for sidelink or backhaul or relay communication. For ease of reference, in some cases it is referred to a channel to represent signaling or transmission on the channel. A PUSCH may represent uplink data signaling, a PDSCH downlink data signaling, a PDCCH downlink control signaling (in particular, one or more DCI messages like scheduling assignments or grants), a PUCCH uplink control signaling, in particular signaling of UCI. In some cases, UCI may be transmitted on PUSCH or associated resource instead of on PUCCH.

A carrier may be portioned into bandwidth parts (BWP). Bandwidth parts can have multiple usages. One of the envisioned usage scenarios is to enable multiple numerologies mixed in frequency-domain on the same carrier. A BWP configuration may indicate a set of frequency-domain resources, and an associate numerology. A UE can be configured with one or multiple BWP parts. DL and UL configurations (and/or SL configurations) may be are independent from each other. Typically, each BWP has its own associated CORESET for the scheduling DCI.

In general, (acknowledgement) feedback may be considered to pertain to information or signaling if is determined based on evaluating error coding included into the information and/or calculated for the information, and/or if it is adapted to indicate a reception status of the information or signaling, e.g. acknowledgement or non-acknowledgement; and/or if it based on measurements performed on the signaling.

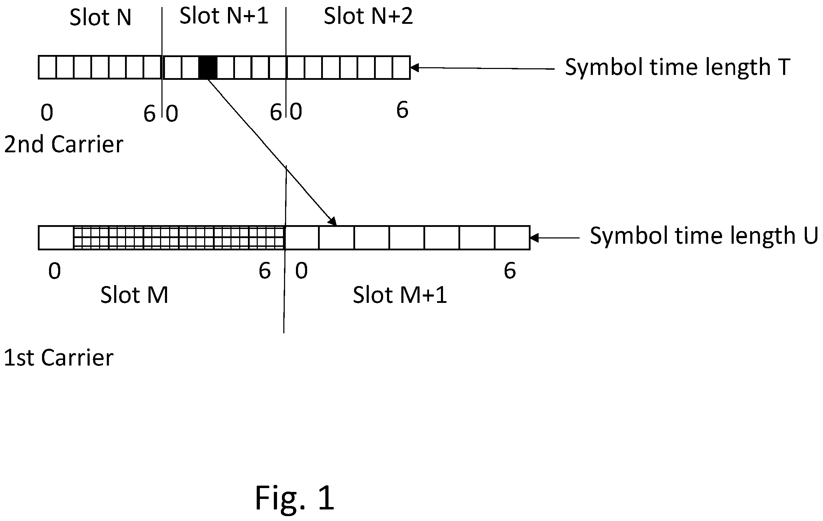

Figure 1 schematically shows updating of a configured transmission timing. There are shown a first and a second carrier with different numerologies. The first numerology of the first carrier may have a symbol time length U which is larger than the symbol time length T of the second numerology of the second carrier, in the example U=2*T, but different ratios may be used. It should be noted that in some cases the carriers may be the same, and/or the active bandwidth part may be the same. The second carrier indicated may be a subject carrier, or associated thereto, e.g. for a different communication direction (e.g., in the context of paired spectrum and/or FDD). The slots of both carriers are shown to have 7 symbols in time, but other variants may be considered, in particular, variants with different numbers of symbols per slot on different carriers. The number of symbols per slot may be configurable or predefined. As indicated in Figure 1, feedback signaling may be configured for slot N+1, in the third symbol in the numerology of the second carrier, e.g. based on subject transmission received earlier on a subject carrier, which may have the same or different numerology. The feedback signaling is configured to be transmitted on the first carrier. On the first carrier, there is an ongoing transmission of second signaling indicated as pattern reaching from symbols 1 to 6 in slot M. Slot 0 may be reserved as control region, but in some cases may be included in the transmission. The transmission may in particular be data transmission, e.g. on PUSCH. Other durations of transmission and/or types of signaling may be considered. It is suggested updating the transmission timing to a later point in time, after the end of the ongoing transmission, as indicated by the arrow. In this case, assuming there are resources scheduled for transmission on symbol 1 of slot M-+1, the feedback signaling may be transmitted with an updated transmission timing determined to be located on this symbol. If the resources scheduled extend over more than one symbol (e.g., to symbols 2 or later), the transmission may be located on a later symbol, or spread out over multiple symbols, e.g. based on number of bits to be transmitted, and/or a time diversity scheme. The transmission timing may be updated to be at the next available opportunity, or later, e.g. depending on priority of the feedback signaling. Determining that the transmission timing has to be updated may be performed before, or during transmission of the second signaling. Determining the updated transmission timing may generally be performed during the transmission of the second signaling, or after it has ended, e.g. when receiving resource allocation information for the next transmission timing structure, e.g. the next slot. If the second signaling ends within a slot, a transmission occasion may be present within the slot, and the updated transmission timing may be determined to be in the slot.

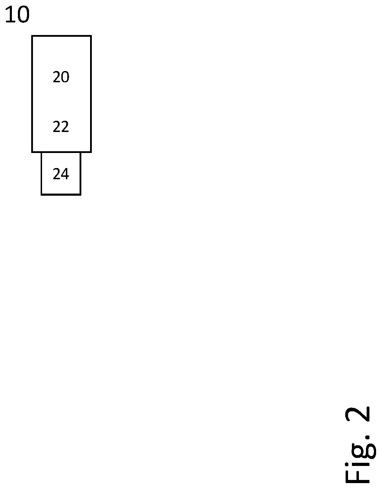

Figure 2 schematically shows a radio node, in particular a terminal or wireless device 10, which may in particular be implemented as a UE (User Equipment). Radio node 10 comprises processing circuitry (which may also be referred to as control circuitry) 20, which may comprise a controller connected to a memory. Any module of the radio node 10, e.g. a communicating module or determining module, may be implemented in and/or executable by, the processing circuitry 20, in particular as module in the controller. Radio node 10 also comprises radio circuitry 22 providing receiving and transmitting or transceiving functionality (e.g., one or more transmitters and/or receivers and/or transceivers), the radio circuitry 22 being connected or connectable to the processing circuitry. An antenna circuitry 24 of the radio node 10 is connected or connectable to the radio circuitry 22 to collect or send and/or amplify signals. Radio circuitry 22 and the processing circuitry 20 controlling it are configured for cellular communication with a network, e.g. a RAN as described herein, and/or for sidelink communication. Radio node 10 may generally be adapted to carry out any of the methods of operating a radio node like terminal or UE disclosed herein; in particular, it may comprise corresponding circuitry, e.g. processing circuitry, and/or modules.

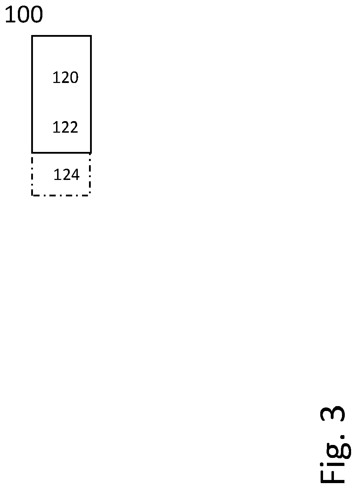

Figure 3 schematically show a radio node 100, which may in particular be implemented as a network node 100, for example an eNB or gNB or similar for NR. Radio node 100 comprises processing circuitry (which may also be referred to as control circuitry) 120, which may comprise a controller connected to a memory. Any module, e.g. transmitting module and/or receiving module and/or configuring module of the node 100 may be implemented in and/or executable by the processing circuitry 120. The processing circuitry 120 is connected to control radio circuitry 122 of the node 100, which provides receiver and transmitter and/or transceiver functionality (e.g., comprising one or more transmitters and/or receivers and/or transceivers). An antenna circuitry 124 may be connected or connectable to radio circuitry 122 for signal reception or transmittance and/or amplification. Node 100 may be adapted to carry out any of the methods for operating a radio node or network node disclosed herein; in particular, it may comprise corresponding circuitry, e.g. processing circuitry, and/or modules. The antenna circuitry 124 may be connected to and/or comprise an antenna array. The node 100, respectively its circuitry, may be adapted to perform any of the methods of operating a network node or a radio node as described herein; in particular, it may comprise corresponding circuitry, e.g. processing circuitry, and/or modules. The radio node 100 may generally comprise communication circuitry, e.g. for communication with another network node, like a radio node, and/or with a core network and/or an internet or local net, in particular with an information system, which may provide information and/or data to be transmitted to a user equipment.

References to specific resource structures like transmission timing structure and/or symbol and/or slot and/or mini-slot and/or subcarrier and/or carrier may pertain to a specific numerology, which may be predefined and/or configured or configurable. A transmission timing structure may represent a time interval, which may cover one or more symbols. Some examples of a transmission timing structure are transmission time interval (TTI), subframe, slot and mini-slot. A slot may comprise a predetermined, e.g. predefined and/or configured or configurable, number of symbols, e.g. 6 or 7, or 12 or 14. A mini-slot may comprise a number of symbols (which may in particular be configurable or configured) smaller than the number of symbols of a slot, in particular 1, 2, 3 or 4 symbols. A transmission timing structure may cover a time interval of a specific length, which may be dependent on symbol time length and/or cyclic prefix used. A transmission timing structure may pertain to, and/or cover, a specific time interval in a time stream, e.g. synchronized for communication. Timing structures used and/or scheduled for transmission, e.g. slot and/or mini-slots, may be scheduled in relation to, and/or synchronized to, a timing structure provided and/or defined by other transmission timing structures. Such transmission timing structures may define a timing grid, e.g., with symbol time intervals within individual structures representing the smallest timing units. Such a timing grid may for example be defined by slots or subframes (wherein in some cases, subframes may be considered specific variants of slots). A transmission timing structure may have a duration (length in time) determined based on the durations of its symbols, possibly in addition to cyclic prefix/es used. The symbols of a transmission timing structure may have the same duration, or may in some variants have different duration. The number of symbols in a transmission timing structure may be predefined and/or configured or configurable, and/or be dependent on numerology. The timing of a mini-slot may generally be configured or configurable, in particular by the network and/or a network node. The timing may be configurable to start and/or end at any symbol of the transmission timing structure, in particular one or more slots.

There is generally considered a program product comprising instructions adapted for causing processing and/or control circuitry to carry out and/or control any method described herein, in particular when executed on the processing and/or control circuitry. Also, there is considered a carrier medium arrangement carrying and/or storing a program product as described herein.

A carrier medium arrangement may comprise one or more carrier media. Generally, a carrier medium may be accessible and/or readable and/or receivable by processing or control circuitry. Storing data and/or a program product and/or code may be seen as part of carrying data and/or a program product and/or code. A carrier medium generally may comprise a guiding/transporting medium and/or a storage medium. A guiding/transporting medium may be adapted to carry and/or carry and/or store signals, in particular electromagnetic signals and/or electrical signals and/or magnetic signals and/or optical signals. A carrier medium, in particular a guiding/transporting medium, may be adapted to guide such signals to carry them. A carrier medium, in particular a guiding/transporting medium, may comprise the electromagnetic field, e.g. radio waves or microwaves, and/or optically transmissive material, e.g. glass fiber, and/or cable. A storage medium may comprise at least one of a memory, which may be volatile or non-volatile, a buffer, a cache, an optical disc, magnetic memory, flash memory, etc.

A system comprising one or more radio nodes as described herein, in particular a network node and a user equipment, is described. The system may be a wireless communication system, and/or provide and/or represent a radio access network.

Moreover, there may be generally considered a method of operating an information system, the method comprising providing information. Alternatively, or additionally, an information system adapted for providing information may be considered. Providing information may comprise providing information for, and/or to, a target system, which may comprise and/or be implemented as radio access network and/or a radio node, in particular a network node or user equipment or terminal. Providing information may comprise transferring and/or streaming and/or sending and/or passing on the information, and/or offering the information for such and/or for download, and/or triggering such providing, e.g. by triggering a different system or node to stream and/or transfer and/or send and/or pass on the information. The information system may comprise, and/or be connected or connectable to, a target, for example via one or more intermediate systems, e.g. a core network and/or internet and/or private or local network. Information may be provided utilising and/or via such intermediate system/s. Providing information may be for radio transmission and/or for transmission via an air interface and/or utilising a RAN or radio node as described herein. Connecting the information system to a target, and/or providing information, may be based on a target indication, and/or adaptive to a target indication. A target indication may indicate the target, and/or one or more parameters of transmission pertaining to the target and/or the paths or connections over which the information is provided to the target. Such parameter/s may in particular pertain to the air interface and/or radio access network and/or radio node and/or network node. Example parameters may indicate for example type and/or nature of the target, and/or transmission capacity (e.g., data rate) and/or latency and/or reliability and/or cost, and/or indicate quality of service and/or latency and/or data throughput and/or prioritisation, in particular they may indicate a capability to provide such, respectively one or more estimates thereof. The target indication may be provided by the target, or determined by the information system, e.g. based on information received from the target and/or historical information, and/or be provided by a user, for example a user operating the target or a device in communication with the target, e.g. via the RAN and/or air interface. For example, a user may indicate on a user equipment communicating with the information system that information is to be provided via a RAN, e.g. by selecting from a selection provided by the information system, for example on a user application or user interface, which may be a web interface. An information system may comprise one or more information nodes. An information node may generally comprise processing circuitry and/or communication circuitry. In particular, an information system and/or an information node may be implemented as a computer and/or a computer arrangement, e.g. a host computer or host computer arrangement and/or server or server arrangement. In some variants, an interaction server (e.g., web server) of the information system may provide a user interface, and based on user input may trigger transmitting and/or streaming information provision to the user (and/or the target) from another server, which may be connected or connectable to the interaction server and/or be part of the information system or be connected or connectable thereto. The information may be any kind of data, in particular data intended for a user of for use at a terminal, e.g. video data and/or audio data and/or location data and/or interactive data and/or game-related data and/or environmental data and/or technical data and/or traffic data and/or vehicular data and/or circumstantial data and/or operational data. The information provided by the information system may be mapped to, and/or mappable to, and/or be intended for mapping to, communication or data signaling and/or one or more data channels as described herein (which may be signaling or channels of an air interface and/or used within a RAN and/or for radio transmission). It may be considered that the information is formatted based on the target indication and/or target, e.g. regarding data amount and/or data rate and/or data structure and/or timing, which in particular may be pertaining to a mapping to communication or data signaling and/or one or more data channel/s. Mapping information to data signaling and/or data channel/s may be considered to refer to using the signaling/channel/s to carry the data, e.g. on higher layers of communication, with the signaling/channel/s underlying the transmission. A target indication generally may comprise different components, which may have different sources, and/or which may indicate different characteristics of the target and/or communication path/s thereto. A format of information may be specifically selected, e.g. from a set of different formats, for information to be transmitted on an air interface and/or by a RAN as described herein. This may be particularly pertinent since an air interface may be limited in terms of capacity and/or of predictability, and/or potentially be cost sensitive. The format may be selected to be adapted to the transmission indication, which may in particular indicate that a RAN or radio node as described herein is in the path (which may be the indicated and/or planned and/or expected path) of information between the target and the information system. A (communication) path of information may represent the interface/s (e.g., air and/or cable interfaces) and/or the intermediate system/s (if any), between the information system and/or the node providing or transferring the information, and the target, over which the information is, or is to be, passed on. A path may be (at least partly) undetermined when a target indication is provided, and/or the information is provided/transferred by the information system, e.g. if an internet is involved, which may comprise multiple, dynamically chosen paths. Information and/or a format used for information may be packet-based, and/or be mapped, and/or be mappable and/or be intended for mapping, to packets. Alternatively, or additionally, there may be considered a method for operating a target device comprising providing a target indicating to an information system. More alternatively, or additionally, a target device may be considered, the target device being adapted for providing a target indication to an information system. In another approach, there may be considered a target indication tool adapted for, and/or comprising an indication module for, providing a target indication to an information system. The target device may generally be a target as described above. A target indication tool may comprise, and/or be implemented as, software and/or application or app, and/or web interface or user interface, and/or may comprise one or more modules for implementing actions performed and/or controlled by the tool. The tool and/or target device may be adapted for, and/or the method may comprise, receiving a user input, based on which a target indicating may be determined and/or provided. Alternatively, or additionally, the tool and/or target device may be adapted for, and/or the method may comprise, receiving information and/or communication signaling carrying information, and/or operating on, and/or presenting (e.g., on a screen and/or as audio or as other form of indication), information. The information may be based on received information and/or communication signaling carrying information. Presenting information may comprise processing received information, e.g. decoding and/or transforming, in particular between different formats, and/or for hardware used for presenting. Operating on information may be independent of or without presenting, and/or proceed or succeed presenting, and/or may be without user interaction or even user reception, for example for automatic processes, or target devices without (e.g., regular) user interaction like MTC devices, of for automotive or transport or industrial use. The information or communication signaling may be expected and/or received based on the target indication. Presenting and/or operating on information may generally comprise one or more processing steps, in particular decoding and/or executing and/or interpreting and/or transforming information. Operating on information may generally comprise relaying and/or transmitting the information, e.g. on an air interface, which may include mapping the information onto signaling (such mapping may generally pertain to one or more layers, e.g. one or more layers of an air interface, e.g. RLC (Radio Link Control) layer and/or MAC layer and/or physical layer/s). The information may be imprinted (or mapped) on communication signaling based on the target indication, which may make it particularly suitable for use in a RAN (e.g., for a target device like a network node or in particular a UE or terminal). The tool may generally be adapted for use on a target device, like a UE or terminal. Generally, the tool may provide multiple functionalities, e.g. for providing and/or selecting the target indication, and/or presenting, e.g. video and/or audio, and/or operating on and/or storing received information. Providing a target indication may comprise transmitting or transferring the indication as signaling, and/or carried on signaling, in a RAN, for example if the target device is a UE, or the tool for a UE. It should be noted that such provided information may be transferred to the information system via one or more additionally communication interfaces and/or paths and/or connections. The target indication may be a higher-layer indication and/or the information provided by the information system may be higher-layer information, e.g. application layer or user-layer, in particular above radio layers like transport layer and physical layer. The target indication may be mapped on physical layer radio signaling, e.g. related to or on the user-plane, and/or the information may be mapped on physical layer radio communication signaling, e.g. related to or on the user-plane (in particular, in reverse communication directions). The described approaches allow a target indication to be provided, facilitating information to be provided in a specific format particularly suitable and/or adapted to efficiently use an air interface. A user input may for example represent a selection from a plurality of possible transmission modes or formats, and/or paths, e.g. in terms of data rate and/or packaging and/or size of information to be provided by the information system.

In general, a numerology and/or subcarrier spacing may indicate the bandwidth (in frequency domain) of a subcarrier of a carrier, and/or the number of subcarriers in a carrier and/or the numbering of the subcarriers in a carrier. Different numerologies may in particular be different in the bandwidth of a subcarrier. In some variants, all the subcarriers in a carrier have the same bandwidth associated to them. The numerology and/or subcarrier spacing may be different between carriers in particular regarding the subcarrier bandwidth. A symbol time length, and/or a time length of a timing structure pertaining to a carrier may be dependent on the carrier frequency, and/or the subcarrier spacing and/or the numerology. In particular, different numerologies may have different symbol time lengths.

Signaling may generally comprise one or more sy and/or signals and/or messages. A signal may comprise or represent one or more bits. An indication may represent signaling, and/or be implemented as a signal, or as a plurality of signals. One or more signals may be included in and/or represented by a message. Signaling, in particular control signaling, may comprise a plurality of signals and/or messages, which may be transmitted on different carriers and/or be associated to different signaling processes, e.g. representing and/or pertaining to one or more such processes and/or corresponding information. An indication may comprise signaling, and/or a plurality of signals and/or messages and/or may be comprised therein, which may be transmitted on different carriers and/or be associated to different acknowledgement signaling processes, e.g. representing and/or pertaining to one or more such processes. Signaling associated to a channel may be transmitted such that represents signaling and/or information for that channel, and/or that the signaling is interpreted by the transmitter and/or receiver to belong to that channel. Such signaling may generally comply with transmission parameters and/or format/s for the channel.

Reference signaling may be signaling comprising one or more reference symbols and/or structures. Reference signaling may be adapted for gauging and/or estimating and/or representing transmission conditions, e.g. channel conditions and/or transmission path conditions and/or channel (or signal or transmission) quality. It may be considered that the transmission characteristics (e.g., signal strength and/or form and/or modulation and/or timing) of reference signaling are available for both transmitter and receiver of the signaling (e.g., due to being predefined and/or configured or configurable and/or being communicated). Different types of reference signaling may be considered, e.g. pertaining to uplink, downlink or sidelink, cell-specific (in particular, cell-wide, e.g., CRS) or device or user specific (addressed to a specific target or user equipment, e.g., CSI-RS), demodulation-related (e.g., DMRS) and/or signal strength related, e.g. power-related or energy-related or amplituderelated (e.g., SRS or pilot signaling) and/or phase-related, etc.

Uplink or sidelink signaling may be OFDMA (Orthogonal Frequency Division Multiple Access) or SC-FDMA (Single Carrier Frequency Division Multiple Access) signaling. Downlink signaling may in particular be OFDMA signaling. However, signaling is not limited thereto (Filter-Bank based signaling may be considered one alternative).

A radio node may generally be considered a device or node adapted for wireless and/or radio (and/or microwave) frequency communication, and/or for communication utilising an air interface, e.g. according to a communication standard.

A radio node may be a network node, or a user equipment or terminal. A network node may be any radio node of a wireless communication network, e.g. a base station and/or gNodeB (gNB) and/or eNodeB (eNB) and/or relay node and/or micro/nano/pico/femto node and/or transmission point (TP) and/or access point (AP) and/or other node, in particular for a RAN as described herein.

The terms wireless device, user equipment (UE) and terminal may be considered to be interchangeable in the context of this disclosure. A wireless device, user equipment or terminal may represent an end device for communication utilising the wireless communication network, and/or be implemented as a user equipment according to a standard. Examples of user equipments may comprise a phone like a smartphone, a personal communication device, a mobile phone or terminal, a computer, in particular laptop, a sensor or machine with radio capability (and/or adapted for the air interface), in particular for MTC (Machine-Type-Communication, sometimes also referred to M2M, Machine-To-Machine), or a vehicle adapted for wireless communication. A user equipment or terminal may be mobile or stationary.

A radio node may generally comprise processing circuitry and/or radio circuitry. A radio node, in particular a network node, may in some cases comprise cable circuitry and/or communication circuitry, with which it may be connected or connectable to another radio node and/or a core network.

Circuitry may comprise integrated circuitry. Processing circuitry may comprise one or more processors and/or controllers (e.g., microcontrollers), and/or ASICs (Application Specific Integrated Circuitry) and/or FPGAs (Field Programmable Gate Array), or similar. It may be considered that processing circuitry comprises, and/or is (operatively) connected or connectable to one or more memories or memory arrangements. A memory arrangement may comprise one or more memories. A memory may be adapted to store digital information. Examples for memories comprise volatile and non-volatile memory, and/or Random Access Memory (RAM), and/or Read-Only-Memory (ROM), and/or magnetic and/or optical memory, and/or flash memory, and/or hard disk memory, and/or EPROM or EEPROM (Erasable Programmable ROM or Electrically Erasable Programmable ROM).

Radio circuitry may comprise one or more transmitters and/or receivers and/or transceivers (a transceiver may operate or be operable as transmitter and receiver, and/or may comprise joint or separated circuitry for receiving and transmitting, e.g. in one package or housing), and/or may comprise one or more amplifiers and/or oscillators and/or filters, and/or may comprise, and/or be connected or connectable to antenna circuitry and/or one or more antennas and/or antenna arrays. An antenna array may comprise one or more antennas, which may be arranged in a dimensional array, e.g. 2D or 3D array, and/or antenna panels. A remote radio head (RRH) may be considered as an example of an antenna array. However, in some variants, a RRH may be also be implemented as a network node, depending on the kind of circuitry and/or functionality implemented therein.

Communication circuitry may comprise radio circuitry and/or cable circuitry. Communication circuitry generally may comprise one or more interfaces, which may be air interface/s and/or cable interface/s and/or optical interface/s, e.g. laser-based. Interface/s may be in particular packet-based. Cable circuitry and/or a cable interfaces may comprise, and/or be connected or connectable to, one or more cables (e.g., optical fiber-based and/or wire-based), which may be directly or indirectly (e.g., via one or more intermediate systems and/or interfaces) be connected or connectable to a target, e.g. controlled by communication circuitry and/or processing circuitry.

Any one or all of the modules disclosed herein may be implemented in software and/or firmware and/or hardware. Different modules may be associated to different components of a radio node, e.g. different circuitries or different parts of a circuitry. It may be considered that a module is distributed over different components and/or circuitries. A program product as described herein may comprise the modules related to a device on which the program product is intended (e.g., a user equipment or network node) to be executed (the execution may be performed on, and/or controlled by the associated circuitry).

A radio access network may be a wireless communication network, and/or a Radio Access Network (RAN) in particular according to a communication standard. A communication standard may in particular a standard according to 3GPP and/or 5G, e.g. according to NR or LTE, in particular LTE Evolution.

Contention-based and/or grant-free transmission and/or access may be based on resource/s that are not specifically scheduled or reserved for the transmission or a specific device (or group of devices in some cases), and/or comprise transmission that is not unambiguously associatable, by the receiver, with a transmitter, e.g. based on the resources used for transmission.

A wireless communication network may be and/or comprise a Radio Access Network (RAN), which may be and/or comprise any kind of cellular and/or wireless radio network, which may be connected or connectable to a core network. The approaches described herein are particularly suitable for a 5G network, e.g. LTE Evolution and/or NR (New Radio), respectively successors thereof. A RAN may comprise one or more network nodes, and/or one or more terminals, and/or one or more radio nodes. A network node may in particular be a radio node adapted for radio and/or wireless and/or cellular communication with one or more terminals. A terminal may be any device adapted for radio and/or wireless and/or cellular communication with or within a RAN, e.g. a user equipment (UE) or mobile phone or smartphone or computing device or vehicular communication device or device for machine-type-communication (MTC), etc. A terminal may be mobile, or in some cases stationary. A RAN or a wireless communication network may comprise at least one network node and a UE, or at least two radio nodes. There may be generally considered a wireless communication network or system, e.g. a RAN or RAN system, comprising at least one radio node, and/or at least one network node and at least one terminal.

Transmitting in downlink may pertain to transmission from the network or network node to the terminal. Transmitting in uplink may pertain to transmission from the terminal to the network or network node. Transmitting in sidelink may pertain to (direct) transmission from one terminal to another. Uplink, downlink and sidelink (e.g., sidelink transmission and reception) may be considered communication directions. In some variants, uplink and downlink may also be used to described wireless communication between network nodes, e.g. for wireless backhaul and/or relay communication and/or (wireless) network communication for example between base stations or similar network nodes, in particular communication terminating at such. It may be considered that backhaul and/or relay communication and/or network communication is implemented as a form of sidelink or uplink communication or similar thereto.

Control information or a control information message or corresponding signaling (control signaling) may be transmitted on a control channel, e.g. a physical control channel, which may be a downlink channel or (or a sidelink channel in some cases, e.g. one UE scheduling another UE). For example, control information/allocation information may be signaled by a network node on PDCCH (Physical Downlink Control Channel) and/or a PDSCH (Physical Downlink Shared Channel) and/or a HARQ-specific channel. Acknowledgement signaling, e.g. as a form of control information or signaling like uplink control information/signaling, may be transmitted by a terminal on a PUCCH (Physical Uplink Control Channel) and/or PUSCH (Physical Uplink Shared Channel) and/or a HARQ-specific channel. Multiple channels may apply for multi-component/multi-carrier indication or signaling.

Signaling may generally be considered to represent an electromagnetic wave structure (e.g., over a time interval and frequency interval), which is intended to convey information to at least one specific or generic (e.g., anyone who might pick up the signaling) target. A process of signaling may comprise transmitting the signaling. Transmitting signaling, in particular control signaling or communication signaling, e.g. comprising or representing acknowledgement signaling and/or resource requesting information, may comprise encoding and/or modulating. Encoding and/or modulating may comprise error detection coding and/or forward error correction encoding and/or scrambling. Receiving control signaling may comprise corresponding decoding and/or demodulation. Error detection coding may comprise, and/or be based on, parity or checksum approaches, e.g. CRC (Cyclic Redundancy Check). Forward error correction coding may comprise and/or be based on for example turbo coding and/or Reed-Muller coding, and/or polar coding and/or LDPC coding (Low Density Parity Check). The type of coding used may be based on the channel (e.g., physical channel) the coded signal is associated to. A code rate may represent the ratio of the number of information bits before encoding to the number of encoded bits after encoding, considering that encoding adds coding bits for error detection coding and forward error correction. Coded bits may refer to information bits (also called systematic bits) plus coding bits.

Communication signaling may comprise, and/or represent, and/or be implemented as, data signaling, and/or user plane signaling. Communication signaling may be associated to a data channel, e.g. a physical downlink channel or physical uplink channel or physical sidelink channel, in particular a PDSCH (Physical Downlink Shared Channel) or PSSCH (Physical Sidelink Shared Channel). Generally, a data channel may be a shared channel or a dedicated channel. Data signaling may be signaling associated to and/or on a data channel.

An indication generally may explicitly and/or implicitly indicate the information it represents and/or indicates. Implicit indication may for example be based on position and/or resource used for transmission. Explicit indication may for example be based on a parametrisation with one or more parameters, and/or one or more index or indices, and/or one or more bit patterns representing the information. It may in particular be considered that control signaling as described herein, based on the utilised resource sequence, implicitly indicates the control signaling type.

A resource element may generally describe the smallest individually usable and/or encodable and/or decodable and/or modulatable and/or demodulatable time-frequency resource, and/or may describe a time-frequency resource covering a symbol time length in time and a subcarrier in frequency. A signal may be allocatable and/or allocated to a resource element. A subcarrier may be a subband of a carrier, e.g. as defined by a standard. A carrier may define a frequency and/or frequency band for transmission and/or reception. In some variants, a signal (jointly encoded/modulated) may cover more than one resource elements. A resource element may generally be as defined by a corresponding standard, e.g. NR or LTE. As symbol time length and/or subcarrier spacing (and/or numerology) may be different between different symbols and/or subcarriers, different resource elements may have different extension (length/width) in time and/or frequency domain, in particular resource elements pertaining to different carriers.

A resource generally may represent a time-frequency and/or code resource, on which signaling, e.g. according to a specific format, may be communicated, for example transmitted and/or received, and/or be intended for transmission and/or reception.

A resource pool generally may indicate and/or comprise resources, in particular time-frequency resources, e.g. time and frequency intervals, which may be contiguous or interrupted, and/or code resources. A resource pool may in particular indicate and/or comprise resource elements and/or resource blocks, e.g. PRBs. A radio node like a user equipment may be considered to be configured with a resource pool if it received corresponding control signaling configuring it therewith. Such control signaling may in particular be transmitted by a receiving radio node as described herein. The control signaling may in particular be higher layer signaling, e.g. MAC and/or RRC signaling, and/or may be semi-static or semi-persistent. In some cases, the responding radio node or user equipment may be considered configured with a resource pool, if it is informed about a corresponding configuration, e.g. that it may access resources in the pool for transmitting. Such a configuration in some cases may be predefined, e.g. based on a standard and/or default configuration. A resource pool may be dedicated to one responding radio node or user equipment, or in some cases shared between several. It may be considered that a resource pool may be general, or for specific types of signaling, e.g. control signaling or data signaling. A transmission resource pool may in particular be for control signaling, e.g. uplink control signaling and/or sidelink control signaling, and/or may be dedicated to the user equipment/responding radio node. It may be considered that a resource pool comprises a plurality of resource structures, which may be arranged in subpools or groups, e.g. pertaining and/or according to type of (received or scheduled) signaling or type of response control signaling. Each group or subpool may comprise a number of resource structures, wherein the number may be representable by an indicator and/or bit field of the selection control information. For example, the maximum number of resource structures in a group may correspond to the maximum number of different values representable by the bit field or indicator. Different groups may have different numbers of resource structures. It may generally be considered that a group comprises a smaller number of resource structures than representable by the indicator or bit field. A resource pool may represent a search space and/or space of availability of resources and/or resource structures available for specific signaling. In particular, a transmission resource pool may be considered to represent a (time/frequency and/or code) domain or space of resources available for response control signaling.

A signaling characteristic may represent resources and/or resource structures in a reception resource pool, which may be different from the transmission resource pool. Resources and/or resource structures representing signaling characteristics of characterising signaling, in particular downlink (or sidelink) control signaling, and/or a corresponding pool, may in particular comprise one or more CORESETs (COntrol REsource SETs), each of which may represent a group or subpool. A CORESET may be associated to a specific time interval, in particular in a transmission timing structure like a slot, e.g. one or more symbols. It may be considered that a first CORESET is configured for the 1, 2, or 3 first symbols in a slot. A second CORESET may be configured for one or more later symbols, e.g. the 5th and/or 6th symbol of the same slot. In this case, the second CORESET may in particular correspond to mini-slot related signaling, e.g. comprise resource structures associated to short (e.g., 1 or 2 symbols) response control signaling, and/or a short latency requirement (e.g., 1 or 2 symbols), and/or received or scheduled transmission in a mini-slot and/or in response to a mini-slot, e.g. mini-slot data signaling. The first CORESET may be associated to slot-based signaling, e.g. long data signaling (e.g., longer than 2, 3 or 4 symbols), and/or response control signaling with relaxed latency requirement (e.g., more than 1 or 2 symbols, and/or allowing transmission in a later transmission timing structure like a later slot or subframe), and/or long response control signaling, e.g. longer than 2 or 3 or 4 symbols. Generally, different CORESETs may be separated in time domain by at least 1 symbol, in particular by 1, 2, 3 or 4 symbols. Depending in which of the groups or subpools, in particular CORESETs, characterising signaling is received, it may be associated to a specific subpool or group of the transmission resource pool. A reception resource pool may be predefined and/or configured to the responding radio node, e.g. by the receiving radio node, which may alternatively or additionally configure the transmission resource pool. Pool configuration may generally be predefined, or performed by the network or a network node (e.g., a receiving radio node), or another responding radio node taking the corresponding functionality and/or also operating as a receiving radio node, e.g. in sidelink communication (in which the configuration may be performed by another UE, or the network/network node).

A border symbol may generally represent a starting symbol or an ending symbol for transmitting and/or receiving. A starting symbol may in particular be a starting symbol of uplink or sidelink signaling, for example control signaling or data signaling. Such signaling may be on a data channel or control channel, e.g. a physical channel, in particular a physical uplink shared channel (like PUSCH) or a sidelink data or shared channel, or a physical uplink control channel (like PUCCH) or a sidelink control channel. If the starting symbol is associated to control signaling (e.g., on a control channel), the control signaling may be in response to received signaling (in sidelink or downlink), e.g. representing acknowledgement signaling associated thereto, which may be HARQ or ARQ signaling. An ending symbol may represent an ending symbol (in time) of downlink or sidelink transmission or signaling, which may be intended or scheduled for the radio node or user equipment. Such downlink signaling may in particular be data signaling, e.g. on a physical downlink channel like a shared channel, e.g. a PDSCH (Physical Downlink Shared Channel). A starting symbol may be determined based on, and/or in relation to, such an ending symbol.

Configuring a radio node, in particular a terminal or user equipment, may refer to the radio node being adapted or caused or set and/or instructed to operate according to the configuration. Configuring may be done by another device, e.g., a network node (for example, a radio node of the network like a base station or eNodeB) or network, in which case it may comprise transmitting configuration data to the radio node to be configured. Such configuration data may represent the configuration to be configured and/or comprise one or more instruction pertaining to a configuration, e.g. a configuration for transmitting and/or receiving on allocated resources, in particular frequency resources. A radio node may configure itself, e.g., based on configuration data received from a network or network node. A network node may utilise, and/or be adapted to utilise, its circuitry/ies for configuring. Allocation information may be considered a form of configuration data. Configuration data may comprise and/or be represented by configuration information, and/or one or more corresponding indications and/or message/s

Generally, configuring may include determining configuration data representing the configuration and providing, e.g. transmitting, it to one or more other nodes (parallel and/or sequentially), which may transmit it further to the radio node (or another node, which may be repeated until it reaches the wireless device). Alternatively, or additionally, configuring a radio node, e.g., by a network node or other device, may include receiving configuration data and/or data pertaining to configuration data, e.g., from another node like a network node, which may be a higher-level node of the network, and/or transmitting received configuration data to the radio node. Accordingly, determining a configuration and transmitting the configuration data to the radio node may be performed by different network nodes or entities, which may be able to communicate via a suitable interface, e.g., an X2 interface in the case of LTE or a corresponding interface for NR. Configuring a terminal may comprise scheduling downlink and/or uplink transmissions for the terminal, e.g. downlink data and/or downlink control signaling and/or DCI and/or uplink control or data or communication signaling, in particular acknowledgement signaling, and/or configuring resources and/or a resource pool therefor.

A resource structure may be considered to be neighbored in frequency domain by another resource structure, if they share a common border frequency, e.g. one as an upper frequency border and the other as a lower frequency border. Such a border may for example be represented by the upper end of a bandwidth assigned to a subcarrier n, which also represents the lower end of a bandwidth assigned to a subcarrier n+1. A resource structure may be considered to be neighbored in time domain by another resource structure, if they share a common border time, e.g. one as an upper (or right in the figures) border and the other as a lower (or left in the figures) border. Such a border may for example be represented by the end of the symbol time interval assigned to a symbol n, which also represents the beginning of a symbol time interval assigned to a symbol n+1.

Generally, a resource structure being neighbored by another resource structure in a domain may also be referred to as abutting and/or bordering the other resource structure in the domain.

A resource structure may general represent a structure in time and/or frequency domain, in particular representing a time interval and a frequency interval. A resource structure may comprise and/or be comprised of resource elements, and/or the time interval of a resource structure may comprise and/or be comprised of symbol time interval/s, and/or the frequency interval of a resource structure may comprise and/or be comprised of subcarrier/s. A resource element may be considered an example for a resource structure, a slot or mini-slot or a Physical Resource Block (PRB) or parts thereof may be considered others. A resource structure may be associated to a specific channel, e.g. a PUSCH or PUCCH, in particular resource structure smaller than a slot or PRB.

Examples of a resource structure in frequency domain comprise a bandwidth or band, or a bandwidth part. A bandwidth part may be a part of a bandwidth available for a radio node for communicating, e.g. due to circuitry and/or configuration and/or regulations and/or a standard. A bandwidth part may be configured or configurable to a radio node. In some variants, a bandwidth part may be the part of a bandwidth used for communicating, e.g. transmitting and/or receiving, by a radio node. The bandwidth part may be smaller than the bandwidth (which may be a device bandwidth defined by the circuitry/configuration of a device, and/or a system bandwidth, e.g. available for a RAN). It may be considered that a bandwidth part comprises one or more resource blocks or resource block groups, in particular one or more PRBs or PRB groups. A bandwidth part may pertain to, and/or comprise, one or more carriers. A resource pool or region or set may generally comprise one or a plurality (in particular, two or a multiple of two larger than two) of resources or resource structures. A resource or resource structure may comprise one or more resource elements (in particular, two or a multiple of two larger than two), or one or more PRBs or PRB groups (in particular, two or a multiple of two larger than two), which may be continuous in frequency.

A carrier may generally represent a frequency range or band and/or pertain to a central frequency and an associated frequency interval. It may be considered that a carrier comprises a plurality of subcarriers. A carrier may have assigned to it a central frequency or center frequency interval, e.g. represented by one or more subcarriers (to each subcarrier there may be generally assigned a frequency bandwidth or interval). Different carriers may be non-overlapping, and/or may be neighboring in frequency domain.

It should be noted that the term "radio" in this disclosure may be considered to pertain to wireless communication in general, and may also include wireless communication utilising microwave and/or millimeter and/or other frequencies, in particular between 100 MHz or 1 GHz, and 100 GHz or 20 or 10 GHz. Such communication may utilise one or more carriers.

A radio node, in particular a network node or a terminal, may generally be any device adapted for transmitting and/or receiving radio and/or wireless signals and/or data, in particular communication data, in particular on at least one carrier. The at least one carrier may comprise a carrier accessed based on a LBT procedure (which may be called LBT carrier), e.g., an unlicensed carrier. It may be considered that the carrier is part of a carrier aggregate.

Receiving or transmitting on a cell or carrier may refer to receiving or transmitting utilizing a frequency (band) or spectrum associated to the cell or carrier. A cell may generally comprise and/or be defined by or for one or more carriers, in particular at least one carrier for UL communication/transmission (called UL carrier) and at least one carrier for DL communication/transmission (called DL carrier). It may be considered that a cell comprises different numbers of UL carriers and DL carriers. Alternatively, or additionally, a cell may comprise at least one carrier for UL communication/transmission and DL communication/transmission, e.g., in TDD-based approaches.

A channel may generally be a logical, transport or physical channel. A channel may comprise and/or be arranged on one or more carriers, in particular a plurality of subcarriers. A channel carrying and/or for carrying control signaling/control information may be considered a control channel, in particular if it is a physical layer channel and/or if it carries control plane information. Analogously, a channel carrying and/or for carrying data signaling/user information may be considered a data channel, in particular if it is a physical layer channel and/or if it carries user plane information. A channel may be defined for a specific communication direction, or for two complementary communication directions (e.g., UL and DL, or sidelink in two directions), in which case it may be considered to have two component channels, one for each direction. Examples of channels comprise a channel for low latency and/or high reliability transmission, in particular a channel for Ultra-Reliable Low Latency Communication (URLLC), which may be for control and/or data.

In general, a symbol may represent and/or be associated to a symbol time length, which may be dependent on the carrier and/or subcarrier spacing and/or numerology of the associated carrier. Accordingly, a symbol may be considered to indicate a time interval having a symbol time length in relation to frequency domain. A symbol time length may be dependent on a carrier frequency and/or bandwidth and/or numerology and/or subcarrier spacing of, or associated to, a symbol. Accordingly, different symbols may have different symbol time lengths. In particular, numerologies with different subcarrier spacings may have different symbol time length. Generally, a symbol time length may be based on, and/or include, a guard time interval or cyclic extension, e.g. prefix or postfix.

A sidelink may generally represent a communication channel (or channel structure) between two UEs and/or terminals, in which data is transmitted between the participants (UEs and/or terminals) via the communication channel, e.g. directly and/or without being relayed via a network node. A sidelink may be established only and/or directly via air interface/s of the participant, which may be directly linked via the sidelink communication channel. In some variants, sidelink communication may be performed without interaction by a network node, e.g. on fixedly defined resources and/or on resources negotiated between the participants. Alternatively, or additionally, it may be considered that a network node provides some control functionality, e.g. by configuring resources, in particular one or more resource pool/s, for sidelink communication, and/or monitoring a sidelink, e.g. for charging purposes.

Sidelink communication may also be referred to as device-to-device (D2D) communication, and/or in some cases as ProSe (Proximity Services) communication, e.g. in the context of LTE. A sidelink may be implemented in the context of V2x communication (Vehicular communication), e.g. V2V (Vehicle-to-Vehicle), V2I (Vehicle-to-Infrastructure) and/or V2P (Vehicle-to-Person). Any device adapted for sidelink communication may be considered a user equipment or terminal.

A sidelink communication channel (or structure) may comprise one or more (e.g., physical or logical) channels, e.g. a PSCCH (Physical Sidelink Control CHannel, which may for example carry control information like an acknowledgement position indication, and/or a PSSCH (Physical Sidelink Shared CHannel, which for example may carry data and/or acknowledgement signaling). It may be considered that a sidelink communication channel (or structure) pertains to and/or used one or more carrier/s and/or frequency range/s associated to, and/or being used by, cellular communication, e.g. according to a specific license and/or standard. Participants may share a (physical) channel and/or resources, in particular in frequency domain and/or related to a frequency resource like a carrier) of a sidelink, such that two or more participants transmit thereon, e.g. simultaneously, and/or time-shifted, and/or there may be associated specific channels and/or resources to specific participants, so that for example only one participant transmits on a specific channel or on a specific resource or specific resources, e.g., in frequency domain and/or related to one or more carriers or subcarriers.

A sidelink may comply with, and/or be implemented according to, a specific standard, e.g. a LTE-based standard and/or NR. A sidelink may utilise TDD (Time Division Duplex) and/or FDD (Frequency Division Duplex) technology, e.g. as configured by a network node, and/or preconfigured and/or negotiated between the participants. A user equipment may be considered to be adapted for sidelink communication if it, and/or its radio circuitry and/or processing circuitry, is adapted for utilising a sidelink, e.g. on one or more frequency ranges and/or carriers and/or in one or more formats, in particular according to a specific standard. It may be generally considered that a Radio Access Network is defined by two participants of a sidelink communication. Alternatively, or additionally, a Radio Access Network may be represented, and/or defined with, and/or be related to a network node and/or communication with such a node.

Communication or communicating may generally comprise transmitting and/or receiving signaling. Communication on a sidelink (or sidelink signaling) may comprise utilising the sidelink for communication (respectively, for signaling). Sidelink transmission and/or transmitting on a sidelink may be considered to comprise transmission utilising the sidelink, e.g. associated resources and/or transmission formats and/or circuitry and/or the air interface. Sidelink reception and/or receiving on a sidelink may be considered to comprise reception utilising the sidelink, e.g. associated resources and/or transmission formats and/or circuitry and/or the air interface. Sidelink control information (e.g., SCI) may generally be considered to comprise control information transmitted utilising a sidelink.

Generally, carrier aggregation (CA) may refer to the concept of a radio connection and/or communication link between a wireless and/or cellular communication network and/or network node and a terminal or on a sidelink comprising a plurality of carriers for at least one direction of transmission (e.g. DL and/or UL), as well as to the aggregate of carriers. A corresponding communication link may be referred to as carrier aggregated communication link or CA communication link; carriers in a carrier aggregate may be referred to as component carriers (CC). In such a link, data may be transmitted over more than one of the carriers and/or all the carriers of the carrier aggregation (the aggregate of carriers). A carrier aggregation may comprise one (or more) dedicated control carriers and/or primary carriers (which may e.g. be referred to as primary component carrier or PCC), over which control information may be transmitted, wherein the control information may refer to the primary carrier and other carriers, which may be referred to as secondary carriers (or secondary component carrier, SCC). However, in some approaches, control information may be send over more than one carrier of an aggregate, e.g. one or more PCCs and one PCC and one or more SCCs.

A transmission may generally pertain to a specific channel and/or specific resources, in particular with a starting symbol and ending symbol in time, covering the interval therebetween. A scheduled transmission may be a transmission scheduled and/or expected and/or for which resources are scheduled or provided or reserved. However, not every scheduled transmission has to be realized. For example, a scheduled downlink transmission may not be received, or a scheduled uplink transmission may not be transmitted due to power limitations, or other influences (e.g., a channel on an unlicensed carrier being occupied). A transmission may be scheduled for a transmission timing substructure (e.g., a mini-slot, and/or covering only a part of a transmission timing structure) within a transmission timing structure like a slot. A border symbol may be indicative of a symbol in the transmission timing structure at which the transmission starts or ends.

Predefined in the context of this disclosure may refer to the related information being defined for example in a standard, and/or being available without specific configuration from a network or network node, e.g. stored in memory, for example independent of being configured. Configured or configurable may be considered to pertain to the corresponding information being set/configured, e.g. by the network or a network node.

A configuration or schedule, like a mini-slot configuration and/or structure configuration, may schedule transmissions, e.g. for the time/transmissions it is valid, and/or transmissions may be scheduled by separate signaling or separate configuration, e.g. separate RRC signaling and/or downlink control information signaling. The transmission/s scheduled may represent signaling to be transmitted by the device for which it is scheduled, or signaling to be received by the device for which it is scheduled, depending on which side of a communication the device is. It should be noted that downlink control information or specifically DCI signaling may be considered physical layer signaling, in contrast to higher layer signaling like MAC (Medium Access Control) signaling or RRC layer signaling. The higher the layer of signaling is, the less frequent/the more time/resource consuming it may be considered, at least partially due to the information contained in such signaling having to be passed on through several layers, each layer requiring processing and handling.

A scheduled transmission, and/or transmission timing structure like a mini-slot or slot, may pertain to a specific channel, in particular a physical uplink shared channel, a physical uplink control channel, or a physical downlink shared channel, e.g. PUSCH, PUCCH or PDSCH, and/or may pertain to a specific cell and/or carrier aggregation. A corresponding configuration, e.g. scheduling configuration or symbol configuration may pertain to such channel, cell and/or carrier aggregation. It may be considered that the scheduled transmission represents transmission on a physical channel, in particular a shared physical channel, for example a physical uplink shared channel or physical downlink shared channel. For such channels, semi-persistent configuring may be particularly suitable.

Generally, a configuration may be a configuration indicating timing, and/or be represented or configured with corresponding configuration data. A configuration may be embedded in, and/or comprised in, a message or configuration or corresponding data, which may indicate and/or schedule resources, in particular semi-persistently and/or semi-statically.

A control region of a transmission timing structure may be an interval in time for intended or scheduled or reserved for control signaling, in particular downlink control signaling, and/or for a specific control channel, e.g. a physical downlink control channel like PDCCH. The interval may comprise, and/or consist of, a number of symbols in time, which may be configured or configurable, e.g. by (UE-specific) dedicated signaling (which may be single-cast, for example addressed to or intended for a specific UE), e.g. on a PDCCH, or RRC signaling, or on a multicast or broadcast channel. In general, the transmission timing structure may comprise a control region covering a configurable number of symbols. It may be considered that in general the border symbol is configured to be after the control region in time.

The duration of a symbol (symbol time length or interval) of the transmission timing structure may generally be dependent on a numerology and/or carrier, wherein the numerology and/or carrier may be configurable. The numerology may be the numerology to be used for the scheduled transmission.

Scheduling a device, or for a device, and/or related transmission or signaling, may be considered comprising, or being a form of, configuring the device with resources, and/or of indicating to the device resources, e.g. to use for communicating. Scheduling may in particular pertain to a transmission timing structure, or a substructure thereof (e.g., a slot or a mini-slot, which may be considered a substructure of a slot). It may be considered that a border symbol may be identified and/or determined in relation to the transmission timing structure even if for a substructure being scheduled, e.g. if an underlying timing grid is defined based on the transmission timing structure. Signaling indicating scheduling may comprise corresponding scheduling information and/or be considered to represent or contain configuration data indicating the scheduled transmission and/or comprising scheduling information. Such configuration data or signaling may be considered a resource configuration or scheduling configuration. It should be noted that such a configuration (in particular as single message) in some cases may not be complete without other configuration data, e.g. configured with other signaling, e.g. higher layer signaling. In particular, the symbol configuration may be provided in addition to scheduling/resource configuration to identify exactly which symbols are assigned to a scheduled transmission. A scheduling (or resource) configuration may indicate transmission timing structure/s and/or resource amount (e.g., in number of symbols or length in time) for a scheduled transmission.

A scheduled transmission may be transmission scheduled, e.g. by the network or network node. Transmission may in this context may be uplink (UL) or downlink (DL) or sidelink (SL) transmission. A device, e.g. a user equipment, for which the scheduled transmission is scheduled, may accordingly be scheduled to receive (e.g., in DL or SL), or to transmit (e.g. in UL or SL) the scheduled transmission. Scheduling transmission may in particular be considered to comprise configuring a scheduled device with resource/s for this transmission, and/or informing the device that the transmission is intended and/or scheduled for some resources. A transmission may be scheduled to cover a time interval, in particular a successive number of symbols, which may form a continuous interval in time between (and including) a starting symbol and an ending symbols. The starting symbol and the ending symbol of a (e.g., scheduled) transmission may be within the same transmission timing structure, e.g. the same slot. However, in some cases, the ending symbol may be in a later transmission timing structure than the starting symbol, in particular a structure following in time. To a scheduled transmission, a duration may be associated and/or indicated, e.g. in a number of symbols or associated time intervals. In some variants, there may be different transmissions scheduled in the same transmission timing structure. A scheduled transmission may be considered to be associated to a specific channel, e.g. a shared channel like PUSCH or PDSCH.

In the context of this disclosure, there may be distinguished between dynamically scheduled or aperiodic transmission and/or configuration, and semi-static or semi-persistent or periodic transmission and/or configuration. The term "dynamic" or similar terms may generally pertain to configuration/transmission valid and/or scheduled and/or configured for (relatively) short timescales and/or a (e.g., predefined and/or configured and/or limited and/or definite) number of occurrences and/or transmission timing structures, e.g. one or more transmission timing structures like slots or slot aggregations, and/or for one or more (e.g., specific number) of transmission/occurrences. Dynamic configuration may be based on low-level signaling, e.g. control signaling on the physical layer and/or MAC layer, in particular in the form of DCI or SCI. Periodic/semi-static may pertain to longer timescales, e.g. several slots and/or more than one frame, and/or a non-defined number of occurrences, e.g., until a dynamic configuration contradicts, or until a new periodic configuration arrives. A periodic or semi-static configuration may be based on, and/or be configured with, higher-layer signaling, in particular RCL layer signaling and/or RRC signaling and/or MAC signaling.

A transmission timing structure may comprise a plurality of symbols, and/or define an interval comprising several symbols (respectively their associated time intervals). In the context of this disclosure, it should be noted that a reference to a symbol for ease of reference may be interpreted to refer to the time domain projection or time interval or time component or duration or length in time of the symbol, unless it is clear from the context that the frequency domain component also has to be considered. Examples of transmission timing structures include slot, subframe, mini-slot (which also may be considered a substructure of a slot), slot aggregation (which may comprise a plurality of slots and may be considered a superstructure of a slot), respectively their time domain component. A transmission timing structure may generally comprise a plurality of symbols defining the time domain extension (e.g., interval or length or duration) of the transmission timing structure, and arranged neighboring to each other in a numbered sequence. A timing structure (which may also be considered or implemented as synchronisation structure) may be defined by a succession of such transmission timing structures, which may for example define a timing grid with symbols representing the smallest grid structures. A transmission timing structure, and/or a border symbol or a scheduled transmission may be determined or scheduled in relation to such a timing grid. A transmission timing structure of reception may be the transmission timing structure in which the scheduling control signaling is received, e.g. in relation to the timing grid. A transmission timing structure may in particular be a slot or subframe or in some cases, a mini-slot.

Feedback signaling may be considered a form or control signaling, e.g. uplink or sidelink control signaling, like UCI (Uplink Control Information) signaling or SCI (Sidelink Control Information) signaling. Feedback signaling may in particular comprise and/or represent acknowledgement signaling and/or acknowledgement information and/or measurement reporting.

Acknowledgement information may comprise an indication of a specific value or state for an acknowledgement signaling process, e.g. ACK or NACK or DTX. Such an indication may for example represent a bit or bit value or bit pattern or an information switch. Different levels of acknowledgement information, e.g. providing differentiated information about quality of reception and/or error position in received data element/s may be considered and/or represented by control signaling. Acknowledgment information may generally indicate acknowledgment or non-acknowledgment or nonreception or different levels thereof, e.g. representing ACK or NACK or DTX. Acknowledgment information may pertain to one acknowledgement signaling process. Acknowledgement signaling may comprise acknowledgement information pertaining to one or more acknowledgement signaling processes, in particular one or more HARQ or ARQ processes. It may be considered that to each acknowledgment signaling process the acknowledgement information pertains to, a specific number of bits of the information size of the control signaling is assigned. Measurement reporting signaling may comprise measurement information.

Signaling may generally comprise one or more symbols and/or signals and/or messages. A signal may comprise and/or represent one or more bits, which may be modulated into a common modulated signal. An indication may represent signaling, and/or be implemented as a signal, or as a plurality of signals. One or more signals may be included in and/or represented by a message. Signaling, in particular control signaling, may comprise a plurality of signals and/or messages, which may be transmitted on different carriers and/or be associated to different acknowledgement signaling processes, e.g. representing and/or pertaining to one or more such processes. An indication may comprise signaling and/or a plurality of signals and/or messages and/or may be comprised therein, which may be transmitted on different carriers and/or be associated to different acknowledgement signaling processes, e.g. representing and/or pertaining to one or more such processes.

Signaling utilising, and/or on and/or associated to, resources or a resource structure may be signaling covering the resources or structure, signaling on the associated frequency/ies and/or in the associated time interval/s. It may be considered that a signaling resource structure comprises and/or encompasses one or more substructures, which may be associated to one or more different channels and/or types of signaling and/or comprise one or more holes (resource element/s not scheduled for transmissions or reception of transmissions). A resource substructure, e.g. a feedback resource structure, may generally be continuous in time and/or frequency, within the associated intervals. It may be considered that a substructure, in particular a feedback resource structure, represents a rectangle filled with one or more resource elements in time/frequency space. However, in some cases, a resource structure or substructure, in particular a frequency resource range, may represent a non-continuous pattern of resources in one or more domains, e.g. time and/or frequency. The resource elements of a substructure may be scheduled for associated signaling.

It should generally be noted that the number of bits or a bit rate associated to specific signaling that can be carried on a resource element may be based on a modulation and coding scheme (MCS). Thus, bits or a bit rate may be seen as a form of resources representing a resource structure or range in frequency and/or time, e.g. depending on MCS. The MCS may be configured or configurable, e.g. by control signaling, e.g. DCI or MAC (Medium Access Control) or RRC (Radio Resource Control) signaling.

Different formats of for control information may be considered, e.g. different formats for a control channel like a Physical Uplink Control Channel (PUCCH). PUCCH may carry control information or corresponding control signaling, e.g. Uplink Control Information (UCI). UCI may comprise feedback signaling, and/or acknowledgement signaling like HARQ feedback (ACK/NACK), and/or measurement information signaling, e.g. comprising Channel Quality Information (CQI), and/or Scheduling Request (SR) signaling. One of the supported PUCCH formats may be short, and may e.g. occur at the end of a slot interval, and/or multiplexed and/or neighboring to PUSCH. Similar control information may be provided on a sidelink, e.g. as Sidelink Control Information (SCI), in particular on a (physical) sidelink control channel, like a (P)SCCH.

A code block may be considered a subelement or substructure of a data element or data block like a transport block, e.g., a transport block may comprise a one or a plurality of code blocks.

A scheduling assignment may be configured with control signaling, e.g. downlink control signaling or sidelink control signaling. Such controls signaling may be considered to represent and/or comprise scheduling signaling, which may indicate scheduling information. A scheduling assignment may be considered scheduling information indicating scheduling of signaling/transmission of signaling, in particular pertaining to signaling received or to be received by the device configured with the scheduling assignment. It may be considered that a scheduling assignment may indicate data (e.g., data block or element and/or channel and/or data stream) and/or an (associated) acknowledgement signaling process and/or resource/s on which the data (or, in some cases, reference signaling) is to be received and/or indicate resource/s for associated feedback signaling, and/or a feedback resource range on which associated feedback signaling is to be transmitted. Transmission associated to an acknowledgement signaling process, and/or the associated resources or resource structure, may be configured and/or scheduled, for example by a scheduling assignment. Different scheduling assignments may be associated to different acknowledgement signaling processes. A scheduling assignment may be considered an example of downlink control information or signaling, e.g. if transmitted by a network node and/or provided on downlink (or sidelink control information if transmitted using a sidelink and/or by a user equipment).

A scheduling grant (e.g., uplink grant) may represent control signaling (e.g., downlink control information/signaling). It may be considered that a scheduling grant configures the signaling resource range and/or resources for uplink (or sidelink) signaling, in particular uplink control signaling and/or feedback signaling, e.g. acknowledgement signaling. Configuring the signaling resource range and/or resources may comprise configuring or scheduling it for transmission by the configured radio node. A scheduling grant may indicate a channel and/or possible channels to be used/usable for the feedback signaling, in particular whether a shared channel like a PUSCH may be used/is to be used. A scheduling grant may generally indicate uplink resource/s and/or an uplink channel and/or a format for control information pertaining to associated scheduling assignments. Both grant and assignment/s may be considered (downlink or sidelink) control information, and/or be associated to, and/or transmitted with, different messages.

A resource structure in frequency domain (which may be referred to as frequency interval and/or range) may be represented by a subcarrier grouping. A subcarrier grouping may comprise one or more subcarriers, each of which may represent a specific frequency interval, and/or bandwidth. The bandwidth of a subcarrier, the length of the interval in frequency domain, may be determined by the subcarrier spacing and/or numerology. The subcarriers may be arranged such that each subcarrier neighbours at least one other subcarrier of the grouping in frequency space (for grouping sizes larger than 1). The subcarriers of a grouping may be associated to the same carrier, e.g. configurably or configured of predefined. A physical resource block may be considered representative of a grouping (in frequency domain). A subcarrier grouping may be considered to be associated to a specific channel and/or type of signaling, it transmission for such channel or signaling is scheduled and/or transmitted and/or intended and/or configured for at least one, or a plurality, or all subcarriers in the grouping. Such association may be time-dependent, e.g. configured or configurable or predefined, and/or dynamic or semi-static. The association may be different for different devices, e.g. configured or configurable or predefined, and/or dynamic or semi-static. Patterns of subcarrier groupings may be considered, which may comprise one or more subcarrier groupings (which may be associated to same or different signalings/channels), and/or one or more groupings without associated signaling (e.g., as seen from a specific device). An example of a pattern is a comb, for which between pairs of groupings associated to the same signaling/channel there are arranged one or more groupings associated to one or more different channels and/or signaling types, and/or one or more groupings without associated channel/signaling).

Rate-matching may comprise including the rate-matched information into a bitstream before encoding and/or modulating, e.g. replacing bits of data. Puncturing may comprise replacing modulated symbols with modulated symbols representing the punctured information.

Example types of signaling comprise signaling of a specific communication direction, in particular, uplink signaling, downlink signaling, sidelink signaling, as well as reference signaling (e.g., SRS or CRS or CSI-RS), communication signaling, control signaling, and/or signaling associated to a specific channel like PUSCH, PDSCH, PUCCH, PDCCH, PSCCH, PSSCH, etc.).

Operational conditions may pertain to load of the RAN, or application or use case of transmission or signaling, and/or quality of service (QoS) conditions (or requirements) for a transmission or signaling. QoS may for example pertain to data rate and/or priority and/or latency and/or transmission quality, e.g. BLER or BER. Use for URLLC may be considered a quality of service-related condition.

In this disclosure, for purposes of explanation and not limitation, specific details are set forth (such as particular network functions, processes and signaling steps) in order to provide a thorough understanding of the technique presented herein. It will be apparent to one skilled in the art that the present concepts and aspects may be practiced in other variants and variants that depart from these specific details.

For example, the concepts and variants are partially described in the context of Long Term Evolution (LTE) or LTE-Advanced (LTE-A) or New Radio mobile or wireless communications technologies; however, this does not rule out the use of the present concepts and aspects in connection with additional or alternative mobile communication technologies such as the Global System for Mobile Communications (GSM). While described variants may pertain to certain Technical Specifications (TSs) of the Third Generation Partnership Project (3GPP), it will be appreciated that the present approaches, concepts and aspects could also be realized in connection with different Performance Management (PM) specifications.

Moreover, those skilled in the art will appreciate that the services, functions and steps explained herein may be implemented using software functioning in conjunction with a programmed microprocessor, or using an Application Specific Integrated Circuit (ASIC), a Digital Signal Processor (DSP), a Field Programmable Gate Array (FPGA) or general purpose computer. It will also be appreciated that while the variants described herein are elucidated in the context of methods and devices, the concepts and aspects presented herein may also be embodied in a program product as well as in a system comprising control circuitry, e.g. a computer processor and a memory coupled to the processor, wherein the memory is encoded with one or more programs or program products that execute the services, functions and steps disclosed herein.

Some useful abbreviations comprise

| Abbreviation | Explanation |
|---|---|
| ACK/NACK | Acknowledgment/Negative Acknowledgement |
| ARQ | Automatic Repeat reQuest |
| CAZAC | Constant Amplitude Zero Cross Correlation |
| CBG | Code Block Group |
| CDM | Code Division Multiplex |
| CM | Cubic Metric |
| CORESET | Control channel Resource Set |
| CQI | Channel Quality Information |
| CRC | Cyclic Redundancy Check |
| CRS | Common reference signal |
| CSI | Channel State Information |
| CSI-RS | Channel state information reference signal |
| DAI | Downlink Assignment Indicator |
| DCI | Downlink Control Information |
| DFT | Discrete Fourier Transform |
| DM(-)RS | Demodulation reference signal(ing) |
| FDD/FDM | Frequency Division Duplex/Multiplex |
| HARQ | Hybrid Automatic Repeat Request |
| IFFT | Inverse Fast Fourier Transform |
| MBB | Mobile Broadband |
| MCS | Modulation and Coding Scheme |
| MIMO | Multiple-input-multiple-output |
| MRC | Maximum-ratio combining |
| MRT | Maximum-ratio transmission |
| MU-MIMO | Multiuser multiple-input-multiple-output |
| OFDM/A | Orthogonal Frequency Division Multiplex/Multiple Access |
| PAPR | Peak to Average Power Ratio |
| PDCCH | Physical Downlink Control Channel |
| PDSCH | Physical Downlink Shared Channel |
| PRACH | Physical Random Access Channel |
| PRB | Physical Resource Block |
| PUCCH | Physical Uplink Control Channel |
| PUSCH | Physical Uplink Shared Channel |
| (P)SCCH | (Physical) Sidelink Control Channel |
| (P)SSCH | (Physical) Sidelink Shared Channel |
| QoS | Quality of Service |
| RB | Resource Block |
| RNTI | Radio Network Temporary Identifier |
| RRC | Radio Resource Control |
| SC-FDM/A | Single Carrier Frequency Division Multiplex/Multiple Access |
| SCI | Sidelink Control Information |
| SINR | Signal-to-interference-plus-noise ratio |
| SIR | Signal-to-interference ratio |
| SNR | Signal-to-noise-ratio |
| SR | Scheduling Request |
| SRS | Sounding Reference Signal(ing) |
| SVD | Singular-value decomposition |
| TDD/TDM | Time Division Duplex/Multiplex |
| UCI | Uplink Control Information |
| UE | User Equipment |
| URLLC | Ultra Low Latency High Reliability Communication |
| VL-MIMO | Very-large multiple-input-multiple-output |
| ZF | Zero Forcing |

Abbreviations may be considered to follow 3GPP usage if applicable.

## Claims

1. Method of operating a user equipment (10) in a radio access network, the user equipment (10) being configured with a feedback configuration of transmission of feedback signaling by the user equipment (10), the feedback signaling pertaining to downlink signaling;
wherein the feedback configuration indicates transmission of feedback signaling on a first carrier with a first numerology and according to a configured transmission timing;
wherein the method comprises transmitting the feedback signaling at an updated transmission timing which is later in time than the configured transmission timing if the configured transmission timing is within a signaling time interval of transmission, by the user equipment (10), of second signaling on the first carrier,
wherein the feedback signaling comprises acknowledgement information and/or measurement information, and
wherein the downlink signaling is transmitted on a downlink carrier with a downlink numerology, wherein the downlink carrier is different from the first carrier and the downlink numerology is different from the first numerology.

2. User equipment (10) for a radio access network, the user equipment (10) being adapted for being configured with a feedback configuration of transmission of feedback signaling by the user equipment (10), the feedback signaling pertaining to downlink signaling;
wherein the feedback configuration indicates transmission of feedback signaling on a first carrier with a first numerology and according to a configured transmission timing;
wherein the user equipment (10) further is adapted for transmitting the feedback signaling at an updated transmission timing which is later in time than the configured transmission timing if the configured transmission timing is within a signaling time interval of transmission, by the user equipment (10), of second signaling on the first carrier
wherein the feedback signaling comprises acknowledgement information and/or measurement information, and
wherein the downlink signaling is transmitted on a downlink carrier with a downlink numerology, wherein the downlink carrier is different from the first carrier and the downlink numerology is different from the first numerology.

3. Method of operating a radio node (100) in a radio access network, the method comprising configuring a user equipment (10) with a feedback configuration of transmission of feedback signaling by the user equipment (10), the feedback signaling pertaining to downlink signaling;
wherein the feedback configuration indicates transmission of feedback signaling on a first carrier with a first numerology and according to a configured transmission timing;
wherein the method further comprises receiving the feedback signaling based on an updated transmission timing which is later in time than the configured transmission timing if the configured transmission timing is within a signaling time interval of transmission, by the user equipment (10), of second signaling on the first carrier,
wherein the feedback signaling comprises acknowledgement information and/or measurement information, and
wherein the downlink signaling is transmitted on a downlink carrier with a downlink numerology, wherein the downlink carrier is different from the first carrier and the downlink numerology is different from the first numerology.

4. Radio node (100) in a radio access network, the radio node (100) being adapted for configuring a user equipment (10) with a feedback configuration of transmission of feedback signaling by the user equipment (10), the feedback signaling pertaining to downlink signaling;
wherein the feedback configuration indicates transmission of feedback signaling on a first carrier with a first numerology and according to a configured transmission timing;
wherein the radio node (100) further is adapted for receiving the feedback signaling based on an updated transmission timing which is later in time than the configured transmission timing if the configured transmission timing is within a signaling time interval of transmission, by the user equipment (10), of second signaling on the first carrier,
wherein the feedback signaling comprises acknowledgement information and/or measurement information, and
wherein the downlink signaling is transmitted on a downlink carrier with a downlink numerology, wherein the downlink carrier is different from the first carrier and the downlink numerology is different from the first numerology.

5. User equipment, radio node or method according to one of the preceding claims, wherein the second signaling is data signaling on a data channel.

6. User equipment, radio node or method according to one of the preceding claims, wherein the configured transmission timing is configured based on a second numerology different from the first numerology.

7. User equipment, radio node or method according to one of the preceding claims, wherein the updated transmission timing is located on resources scheduled for a control channel or a data channel.

8. User equipment, radio node or method according to one of the preceding claims, wherein the feedback signaling is rate-matched or punctured on data signaling after the second signaling.

9. User equipment, radio node or method according to one of the preceding claims, wherein the feedback signaling comprises an indication of the downlink signaling it pertains to.

10. User equipment, radio node or method according to one of the preceding claims, wherein the downlink signaling is data signaling or control signaling.

11. User equipment, radio node or method according to one of the preceding claims, wherein the configured transmission timing is configured relative to a second carrier, and/or a second numerology having a shorter symbol time length than the first numerology.

12. User equipment or method according to one of the preceding claims, wherein the feedback configuration is configured based on one or more Radio Resource Control messages and/or one or more Medium Access Control messages and/or one or more Downlink Control Information messages and/or one or more Sidelink Control Information messages.

13. Program product comprising instructions adapted for causing processing circuitry to perform a method according to one of claims 1 or 3.

14. Carrier medium arrangement carrying and/or storing a program product according to claim 13.

## Patentansprüche

1. Betriebsverfahren für eine Benutzereinrichtung (10) in einem Funkzugangsnetzwerk, wobei die Benutzereinrichtung (10) mit einer Rückmeldungskonfiguration zur Übertragung von Rückmeldungssignalisierung durch die Benutzereinrichtung (10) konfiguriert wird, wobei die Rückmeldungssignalisierung Downlink-Signalisierung betrifft;
wobei die Rückmeldungskonfiguration Übertragung von Rückmeldungssignalisierung auf einem ersten Träger mit einer ersten Numerologie und gemäß einem konfigurierten Übertragungstakt anzeigt;
wobei das Verfahren ein Senden der Rückmeldungssignalisierung in einem aktualisierten Übertragungstakt umfasst, der zeitlich später als der konfigurierte Übertragungstakt ist, wenn der konfigurierte Übertragungstakt innerhalb eines Signalisierungszeitintervalls von Übertragung zweiter Signalisierung auf dem ersten Träger durch die Benutzereinrichtung (10) liegt,
wobei die Rückmeldungssignalisierung Bestätigungsinformationen und/oder Messinformationen umfasst, und
wobei die Downlink-Signalisierung auf einem Downlink-Träger mit einer Downlink-Numerologie gesendet wird, wobei der Downlink-Träger sich vom ersten Träger unterscheidet und die Downlink-Numerologie sich von der ersten Numerologie unterscheidet.

2. Benutzereinrichtung (10) für ein Funkzugangsnetzwerk, wobei die Benutzereinrichtung (10) dazu ausgelegt ist, mit einer Rückmeldungskonfiguration zur Übertragung von Rückmeldungssignalisierung durch die Benutzereinrichtung (10) konfiguriert zu werden, wobei die Rückmeldungssignalisierung Downlink-Signalisierung betrifft;
wobei die Rückmeldungskonfiguration Übertragung von Rückmeldungssignalisierung auf einem ersten Träger mit einer ersten Numerologie und gemäß einem konfigurierten Übertragungstakt anzeigt;
wobei die Benutzereinrichtung (10) ferner zum Senden der Rückmeldungssignalisierung in einem aktualisierten Übertragungstakt ausgelegt ist, der zeitlich später als der konfigurierte Übertragungstakt ist, wenn der konfigurierte Übertragungstakt innerhalb eines Signalisierungszeitintervalls von Übertragung zweiter Signalisierung auf dem ersten Träger durch die Benutzereinrichtung (10) liegt,
wobei die Rückmeldungssignalisierung Bestätigungsinformationen und/oder Messinformationen umfasst, und
wobei die Downlink-Signalisierung auf einem Downlink-Träger mit einer Downlink-Numerologie gesendet wird, wobei der Downlink-Träger sich vom ersten Träger unterscheidet und die Downlink-Numerologie sich von der ersten Numerologie unterscheidet.

3. Betriebsverfahren für einen Funkknoten (100) in einem Funkzugangsnetzwerk, wobei das Verfahren ein Konfigurieren einer Benutzereinrichtung (10) mit einer Rückmeldungskonfiguration zur Übertragung von Rückmeldungssignalisierung durch die Benutzereinrichtung (10) umfasst, wobei die Rückmeldungssignalisierung Downlink-Signalisierung betrifft;
wobei die Rückmeldungskonfiguration Übertragung von Rückmeldungssignalisierung auf einem ersten Träger mit einer ersten Numerologie und gemäß einem konfigurierten Übertragungstakt anzeigt;
wobei das Verfahren ferner ein Empfangen der Rückmeldungssignalisierung basierend auf einem aktualisierten Übertragungstakt umfasst, der zeitlich später als der konfigurierte Übertragungstakt ist, wenn der konfigurierte Übertragungstakt innerhalb eines Signalisierungszeitintervalls von Übertragung zweiter Signalisierung auf dem ersten Träger durch die Benutzereinrichtung (10) liegt,
wobei die Rückmeldungssignalisierung Bestätigungsinformationen und/oder Messinformationen umfasst, und
wobei die Downlink-Signalisierung auf einem Downlink-Träger mit einer Downlink-Numerologie gesendet wird, wobei der Downlink-Träger sich vom ersten Träger unterscheidet und die Downlink-Numerologie sich von der ersten Numerologie unterscheidet.

4. Funkknoten (100) in einem Funkzugangsnetzwerk, wobei der Funkknoten (100) zum Konfigurieren einer Benutzereinrichtung (10) mit einer Rückmeldungskonfiguration zur Übertragung von Rückmeldungssignalisierung durch die Benutzereinrichtung (10) ausgelegt ist, wobei die Rückmeldungssignalisierung Downlink-Signalisierung betrifft;
wobei die Rückmeldungskonfiguration Übertragung von Rückmeldungssignalisierung auf einem ersten Träger mit einer ersten Numerologie und gemäß einem konfigurierten Übertragungstakt anzeigt;
wobei der Funkknoten (100) ferner zum Empfangen der Rückmeldungssignalisierung basierend auf einem aktualisierten Übertragungstakt ausgelegt ist, der zeitlich später als der konfigurierte Übertragungstakt ist, wenn der konfigurierte Übertragungstakt innerhalb eines Signalisierungszeitintervalls von Übertragung zweiter Signalisierung auf dem ersten Träger durch die Benutzereinrichtung (10) liegt,
wobei die Rückmeldungssignalisierung Bestätigungsinformationen und/oder Messinformationen umfasst, und
wobei die Downlink-Signalisierung auf einem Downlink-Träger mit einer Downlink-Numerologie gesendet wird, wobei der Downlink-Träger sich vom ersten Träger unterscheidet und die Downlink-Numerologie sich von der ersten Numerologie unterscheidet.

5. Benutzereinrichtung, Funkknoten oder Verfahren nach einem der vorhergehenden Ansprüche, wobei es sich bei der zweiten Signalisierung um Datensignalisierung auf einem Datenkanal handelt.

6. Benutzereinrichtung, Funkknoten oder Verfahren nach einem der vorhergehenden Ansprüche, wobei der konfigurierte Übertragungstakt basierend auf einer zweiten Numerologie konfiguriert wird, die sich von der ersten Numerologie unterscheidet.

7. Benutzereinrichtung, Funkknoten oder Verfahren nach einem der vorhergehenden Ansprüche, wobei sich der aktualisierte Übertragungstakt auf Ressourcen befindet, die für einen Steuerkanal oder einen Datenkanal disponiert werden.

8. Benutzereinrichtung, Funkknoten oder Verfahren nach einem der vorhergehenden Ansprüche, wobei die Rückmeldungssignalisierung bei Datensignalisierung nach der zweiten Signalisierung ratenangepasst oder punktiert wird.

9. Benutzereinrichtung, Funkknoten oder Verfahren nach einem der vorhergehenden Ansprüche, wobei die Rückmeldungssignalisierung eine Anzeige der Downlink-Signalisierung umfasst, die sie betrifft.

10. Benutzereinrichtung, Funkknoten oder Verfahren nach einem der vorhergehenden Ansprüche, wobei es sich bei der Downlink-Signalisierung um Datensignalisierung oder Steuersignalisierung handelt.

11. Benutzereinrichtung, Funkknoten oder Verfahren nach einem der vorhergehenden Ansprüche, wobei der konfigurierte Übertragungstakt in Bezug auf einen zweiten Träger und/oder eine zweite Numerologie mit einer kürzeren Symbollänge als die erste Numerologie konfiguriert wird.

12. Benutzereinrichtung oder Verfahren nach einem der vorhergehenden Ansprüche, wobei die Rückmeldungskonfiguration basierend auf einer oder mehreren Funkressourcensteuernachrichten und/oder einer oder mehreren Medienzugriffssteuernachrichten und/oder einer oder mehreren Downlink-Steuerinformationsnachrichten und/oder einer oder mehreren Sidelink-Steuerinformationsnachrichten konfiguriert wird.

13. Programmprodukt, umfassend Anweisungen, die so ausgelegt sind, dass sie Verarbeitungsschaltungsanordnung zum Durchführen eines Verfahrens nach einem der Ansprüche 1 bis 3 veranlassen.

14. Trägermedienanordnung, die ein Programmprodukt nach Anspruch 13 trägt und/oder speichert.

## Revendications

1. Procédé de fonctionnement d'un équipement utilisateur (10) dans un réseau d'accès radio, l'équipement utilisateur (10) étant configuré avec une configuration de rétroaction de transmission de signalisation de rétroaction par l'équipement utilisateur (10), la signalisation de rétroaction concernant une signalisation de liaison descendante ;
dans lequel la configuration de rétroaction indique une transmission d'une signalisation de rétroaction sur une première porteuse avec une première numérologie et selon une temporisation de transmission configurée ;
dans lequel le procédé comprend la transmission de la signalisation de rétroaction à une temporisation de transmission mise à jour qui est plus tard dans le temps que la temporisation de transmission configurée si la temporisation de transmission configurée est à l'intérieur d'un intervalle de temps de signalisation de transmission, par l'équipement utilisateur (10), d'une deuxième signalisation sur la première porteuse,
dans lequel la signalisation de rétroaction comprend des informations d'accusé de réception et/ou des informations de mesure, et
dans lequel la signalisation de liaison descendante est transmise sur une porteuse de liaison descendante avec une numérologie de liaison descendante, dans lequel la porteuse de liaison descendante est différente de la première porteuse et la numérologie de liaison descendante est différente de la première numérologie.

2. Equipement utilisateur (10) pour un réseau d'accès radio, l'équipement utilisateur (10) étant apte à être configuré avec une configuration de rétroaction de transmission de signalisation de rétroaction par l'équipement utilisateur (10), la signalisation de rétroaction concernant une signalisation de liaison descendante ;
dans lequel la configuration de rétroaction indique une transmission d'une signalisation de rétroaction sur une première porteuse avec une première numérologie et selon une temporisation de transmission configurée ;
dans lequel l'équipement utilisateur (10) est en outre apte à transmettre la signalisation de rétroaction à une temporisation de transmission mise à jour qui est plus tard dans le temps que la temporisation de transmission configurée si la temporisation de transmission configurée est à l'intérieur d'un intervalle de temps de signalisation de transmission, par l'équipement utilisateur (10), d'une deuxième signalisation sur la première porteuse,
dans lequel la signalisation de rétroaction comprend des informations d'accusé de réception et/ou des informations de mesure, et
dans lequel la signalisation de liaison descendante est transmise sur une porteuse de liaison descendante avec une numérologie de liaison descendante, dans lequel la porteuse de liaison descendante est différente de la première porteuse et la numérologie de liaison descendante est différente de la première numérologie.

3. Procédé de fonctionnement d'un noeud radio (100) dans un réseau d'accès radio, le procédé comprenant la configuration d'un équipement utilisateur (10) avec une configuration de rétroaction de transmission de signalisation de rétroaction par l'équipement utilisateur (10), la signalisation de rétroaction concernant une signalisation de liaison descendante ;
dans lequel la configuration de rétroaction indique une transmission d'une signalisation de rétroaction sur une première porteuse avec une première numérologie et selon une temporisation de transmission configurée ;
dans lequel le procédé comprend en outre la réception de la signalisation de rétroaction sur la base d'une temporisation de transmission mise à jour qui est plus tard dans le temps que la temporisation de transmission configurée si la temporisation de transmission configurée est à l'intérieur d'un intervalle de temps de signalisation de transmission, par l'équipement utilisateur (10), d'une deuxième signalisation sur la première porteuse,
dans lequel la signalisation de rétroaction comprend des informations d'accusé de réception et/ou des informations de mesure, et
dans lequel la signalisation de liaison descendante est transmise sur une porteuse de liaison descendante avec une numérologie de liaison descendante, dans lequel la porteuse de liaison descendante est différente de la première porteuse et la numérologie de liaison descendante est différente de la première numérologie.

4. Noeud radio (100) dans un réseau d'accès radio, le noeud radio (100) étant apte à configurer un équipement utilisateur (10) avec une configuration de rétroaction de transmission de signalisation de rétroaction par l'équipement utilisateur (10), la signalisation de rétroaction concernant une signalisation de liaison descendante ;
dans lequel la configuration de rétroaction indique une transmission d'une signalisation de rétroaction sur une première porteuse avec une première numérologie et selon une temporisation de transmission configurée ;
dans lequel le noeud radio (100) est en outre apte à recevoir la signalisation de rétroaction sur la base d'une temporisation de transmission mise à jour qui est plus tard dans le temps que la temporisation de transmission configurée si la temporisation de transmission configurée est à l'intérieur d'un intervalle de temps de signalisation de transmission, par l'équipement utilisateur (10), d'une deuxième signalisation sur la première porteuse,
dans lequel la signalisation de rétroaction comprend des informations d'accusé de réception et/ou des informations de mesure, et
dans lequel la signalisation de liaison descendante est transmise sur une porteuse de liaison descendante avec une numérologie de liaison descendante, dans lequel la porteuse de liaison descendante est différente de la première porteuse et la numérologie de liaison descendante est différente de la première numérologie.

5. Equipement utilisateur, noeud radio, ou procédé selon l'une des revendications précédentes, dans lequel la deuxième signalisation est une signalisation de données sur un canal de données.

6. Equipement utilisateur, noeud radio, ou procédé selon l'une des revendications précédentes, dans lequel la temporisation de transmission configurée est configurée sur la base d'une deuxième numérologie différente de la première numérologie.

7. Equipement utilisateur, noeud radio, ou procédé selon l'une des revendications précédentes, dans lequel la temporisation de transmission mise à jour est située sur des ressources planifiées pour un canal de commande ou un canal de données.

8. Equipement utilisateur, noeud radio, ou procédé selon l'une des revendications précédentes, dans lequel la signalisation de rétroaction est adaptée en débit ou perforée sur une signalisation de données après la deuxième signalisation.

9. Equipement utilisateur, noeud radio, ou procédé selon l'une des revendications précédentes, dans lequel la signalisation de rétroaction comprend une indication de la signalisation de liaison descendante qu'elle concerne.

10. Equipement utilisateur, noeud radio, ou procédé selon l'une des revendications précédentes, dans lequel la signalisation de liaison descendante est une signalisation de données ou une signalisation de commande.

11. Equipement utilisateur, noeud radio, ou procédé selon l'une des revendications précédentes, dans lequel la temporisation de transmission configurée est configurée par rapport à une deuxième porteuse et/ou à une deuxième numérologie présentant une longueur de temps de symbole plus courte que la première numérologie.

12. Equipement utilisateur ou procédé selon l'une des revendications précédentes, dans lequel la configuration de rétroaction est configurée sur la base d'un ou plusieurs messages de commande de ressources radio et/ou d'un ou plusieurs messages de commande d'accès au support et/ou d'un ou plusieurs messages d'informations de commande de liaison descendante et/ou d'un ou plusieurs messages d'informations de commande de liaison latérale.

13. Produit programme comprenant des instructions aptes à amener une circuiterie de traitement à réaliser un procédé selon la revendication 1 ou 3.

14. Agencement de support porteur portant et/ou stockant un produit programme selon la revendication 13.
